(19) **Europäisches Patentamt / European Patent Office / Office européen des brevets**

(11) **EP 3 182 785 A1**

(12) **EUROPEAN PATENT APPLICATION**
published in accordance with Art. 153(4) EPC

(43) Date of publication:
**21.06.2017 Bulletin 2017/25**

(21) Application number: **15831705.7**

(22) Date of filing: **10.04.2015**

(51) Int Cl.:
**H04W 74/08** (2009.01)

(86) International application number:
**PCT/CN2015/076370**

(87) International publication number:
**WO 2016/023379 (18.02.2016 Gazette 2016/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.08.2014  CN 201410392774**

(71) Applicant: **ZTE Corporation**
**Shenzhen, Guangdong 518057 (CN)**

(72) Inventors:
- **LIU, Kun**
  **Shenzhen**
  **Guangdong 518057 (CN)**
- **DAI, Bo**
  **Shenzhen**
  **Guangdong 518057 (CN)**
- **LU, Zhaohua**
  **Shenzhen**
  **Guangdong 518057 (CN)**
- **XIA, Shuqiang**
  **Shenzhen**
  **Guangdong 518057 (CN)**
- **SHI, Jing**
  **Shenzhen**
  **Guangdong 518057 (CN)**
- **LI, Xincai**
  **Shenzhen**
  **Guangdong 518057 (CN)**
- **FANG, Huiying**
  **Shenzhen**
  **Guangdong 518057 (CN)**

(74) Representative: **HGF Limited**
**4th Floor**
**Merchant Exchange**
**17-19 Whitworth Street West**
**Manchester M1 5WG (GB)**

(54) **METHOD AND APPARATUS FOR TRANSMITTING RANDOM ACCESS RESPONSE MESSAGE**

(57)     The present invention provides a method and apparatus for transmitting a random access response. The method includes: a node of a first type sending indication information of a random access response of a node of a third type through a downlink channel, herein the indication information includes at least one of: indication information of a set to which the node of the third type belongs, and resource position indication information of the random access response of the node of the third type, herein the node of the third type is node of a second type in one or more sets $P(j)$, $0 \leq j \leq J - 1$, and J is a positive integer equal to or grater than 1. Through the present invention, the problem in the related art of how to accurately transmit the random access response sent to different types of terminals is solved, the probability that the node of the third type detects the random access response correctly is improved, and the power consumption of the node of the third type is reduced.

a node of a first type sends indication information of a random access response of a node of a third type through a downlink channel, herein the indication information includes at least one of: indication information of a set to which the node of the third type belongs, and resource position indication information of the random access response of the node of the third type — S102

FIG. 1

**Description**

Technical Field

The present invention relates to the field of communications, and in particular to a method and apparatus for transmitting a random access response.

Background of the Related Art

Machine Type Communication (MTC) User Equipment (UE), which is also called Machine to Machine (M2M) user communication device, is the main application form of the Internet of things at the present stage. The low power consumption and the low cost are important guarantees for the large-scale application of the MTC UE. The M2M devices currently deployed in the market are mainly based on the Global System of Mobile communication (GSM). In recent years, because of the improvement of spectrum efficiency of Long Term Evolution (LTE)/LTE-A (a subsequent evolution of LTE), LTE/LTE-A is selected by more and more mobile operators as the direction of evolution of future broadband wireless communication systems. A variety of M2M data services based on the LTE/LTE-A will be more attractive. The M2M services cannot be really transferred from a GSM to an LTE system unless the cost of LTE-M2M devices can be lower than that of MTC terminals of the GSM.

At present, main alternative methods for lowering the cost of the MTC user terminals include: reducing the number of receiving antennas of the terminals, reducing the baseband processing bandwidth of the terminals, reducing the peak rate supported by the terminals, and adopting a half-duplex mode, and so on. However, the reduction of the cost means the reduction of performance, while the demand for the cell coverage of a LTE/LTE-A system cannot be lowered. Thus, some measures should be taken by the MTC terminals configured with the low-cost so as to meet a demand for the coverage performance of existing LTE terminals. Moreover, the MTC terminals may be located in basements, at wall corners or the like and are therefore in a worse environment than common LTE UEs. In order to make up the decreased coverage caused by penetration loss to guarantee the performance index of these MTC UEs, it is necessary to enhance the coverage of the uplink and the downlink of the MTC UEs in this environment. How to guarantee the access quality of the MTC UEs is an issue that should be considered first.

A total of five sending formats of random access signaling (also called preamble formats), that is, preamble formats 0-4, are configured in the existing LTE/LTE-A systems. A base station (Evolved Node B, abbreviated as eNB) selects one preamble format from the five preamble formats and sends configuration information of the selected preamble format to a UE via a System Information Block (SIB). After acquiring the preamble format supported by the current system, the UE generates random access signaling (also called Message1, abbreviated as Msg1) according to the currently configured access random sequence and the specific format of the selected preamble format. The UE sends the random access signaling on a Physical Random Access Channel (PRACH).

The eNB in the LTE/LTE-A system detects, on the PRACH, the random access signaling sent by the UE, and once the eNB detects the random access signaling sent by the UE, the eNB will send a Random Access Response (RAR, also called Message2, or abbreviated as Msg2) to the UE.

In the LTE/LTE-A system, position information of a Physical Resource Block (abbreviated as PRB) occupied by the random access response is contained in Downlink Control Information (DCI) and sent through a Physical Downlink Control Channel (abbreviated as PDCCH). Moreover, a 16-bit Cyclic Redundancy Check (abbreviated as CRC) is further included in the DCI, and the CRC is further scrambled using a 16-bit Random Access Radio Network Temporary Identity (abbreviated as RA_RNTI) in the following way:

$$c_k = (b_k + a_k) \bmod 2 \quad k = 0, 1, \ldots, 15,$$

herein $b_k$ represents the (k+1)th bit in the CRC, $a_k$ represents the (k+1)th bit in the RA_RNTI, and $c_k$ represents the (k+1)th bit generated after the scrambling.

The UE receives the RAR and acquire time synchronization of the uplink and uplink resources. However, at this moment, the UE cannot determine whether the RAR is sent to itself or to other UEs because there is possibility that different UEs send identical random access sequences on the same time-frequency resources and thus receive the same RAR via the same RA_RNTI. Moreover, the UE cannot know whether there are other UEs using the same resources for random access. Therefore, the UE needs to resolve such a random access contention through a subsequent message 3 (Message3, abbreviated as Msg3) and a subsequent message 4 (Message4, abbreviated as Msg4).

The Msg3 is the first message that is transmitted on a Physical Uplink Shared Channel (PUSCH) based on uplink scheduling and using a Hybrid Automatic Repeat request (HARQ) mechanism. During the initial random access process, an RRC connection request is transmitted in the Msg3, if different UEs receive the same RAR, then they will acquire the same uplink resource and send the Msg3 at the same time. In order to distinguish different UEs, the specific ID of each UE is carried in the Msg3 for distinguishing different UEs. In the case of the initial access, this ID may be a (SAE-Temporary Mobile Subscriber Identity) S-TMSI (if any) of the UE or a randomly generated 40-bit number.

The UE starts a contention elimination timer immediately the UE sends the Msg3 (subsequently, the timer will be restarted every time the Msg3 is retransmitted), and during the time set by the timer, the UE needs to monitor a contention resolution message (Msg4) which is returned to itself by the eNodeB.

To guarantee the access of the MTC UEs to a network even in a hostile environment, an enhanced design should be made for the random access process of the MTC UEs so as to guarantee the normal access of the MTC UEs to a system. Based on this idea, the MTC UEs can be divided, for example, into different sets, and an enhanced design is made according to features of the different sets of the MTC UEs to guarantee the normal access of the MTC UEs to the system. However, how each of the MTC UEs of different types can accurately acquire the random access response sent to it is not mentioned in the related art.

No effective solution has been proposed yet to solve the problem in the related art of how to accurately transmit the random access response that are sent to different types of terminals.

Content of the Invention

Embodiments of the present invention provide a method and apparatus for transmitting a random access response to at least solve the problem in the related art of how to accurately transmit the random access response that is sent to different types of terminals.

According to an embodiment of the present invention, a method for transmitting a random access response includes: sending, by a node of a first type, indication information of a random access response of a node of a third type through a downlink channel, herein the indication information inlcudes at least one of: indication information of a set to which the node of the third type belongs, and resource position indication information of the random access response of the node of the third type; hherein the node of the third type is a node of a second type in one or more sets $P(j)$, $0 \leq j \leq J - 1$, and J is a positive integer which is equal to or grater than 1.

In the present embodiment, before a node of a first type sends indication information of a random access response of a node of a third type through a downlink channel, the method further includes: sending, by the node of the third type, a random access signaling to the node of the first type on a Physical Random Access Channel, PRACH.

In the present embodiment, before a node of a first type sends indication information of a random access response of a node of a third type through a downlink channel, the method further includes: dividing nodes of the second type into J sets $P(j)$ according to a predefined rule.

In the present embodiment, in the case that the indication information of the random access response includes the indication information of the set to which the node of the third type belongs, the method further includes: describing the indication information of the set using a bitmap.

In the present embodiment, in the case that the indication information of the random access response includes the indication information of the set to which the node of the third type belongs, the method further includes: describing the indication information of the set using $\lceil \log_2 J \rceil$ bits, herein $\lceil \ \rceil$ represents rounding up.

In the present embodiment, sending, by a node of a first type, indication information of a random access response of a node of a third type through a downlink channel includes: containing, by the node of the first type, the indication information of the random access response of the node of the third type into downlink control information, DCI, herein the DCI further includes a Cyclic Redundancy Check, CRC, and the CRC is scrambled using a Random Access-Radio Network Temporary Identity, RA_RNTI; and sending, by the node of the first type, the DCI through a Physical Downlink Control Channel, PDCCH, or an Enhanced Physical Downlink Control Channel, EPDCCH.

In the present embodiment, the RA_RNTI used in the scrambling of the CRC is marked as *Specific_RNTI*, the *Specific_RNTI* is selected from a set of Radio Network Temporary Identities, RNTI, marked as *reserve-RNTI-set*, herein elements in the *reserve-RNTI-set* are at least one of: a part of or all of RNTIs available to a node of a fourth type; a part of or all of RA_RNTIs available to the node of the fourth type; a part of or all of RNTIs allocated to the node of the second type; and a part of or all of RA_RNTIs allocated to the node of the second type.

In the present embodiment, the RA_RNTIs in the *reserve-RNTI-set* are different from an RNTI allocated to the node of the fourth type.

In the present embodiment, an index of the *Specific_RNTI* in the *reserve-RNTI-set* is at least determined by a *frame_id*, a *subframe_id* and an *f_id*, herein, the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; and the *subframe_id* is an index number or a relative index number of a subframe at which the starting time domain resource of the occupied PRACH is located when the random access signaling is sent.

In the present embodiment, the *Specific RNTI* is calculated according to following formulas: *Specific_RNTI_Index* = mod(*a* × *frame_id* + *b* × *subframe_id* + *c* × *f_id* + *Offset*, *N*)*,* and, *Specific_RNTI = reserve - RNTI - set*(*Specific_RNTI_Index*), herein, *a*, *b* and *c* are all integers equal to or greater than 0; *Offset* is an offset configured by a system; N represents the number of the allocated *Specific_RNTIs*; *Specific_RNTI_Index* represents an index of the *Specific_RNTI* in the *reserve-RNTI-set*; and mod(*x*, *y*) represents an operation of taking a remainder from a division of x by y.

In the present embodiment, the RA_RNTI used in the scrambling of the CRC is marked as *Specific_RNTI*, and the *Specific_RNTI* is at least determined by a *frame_id*, a *subframe_id* and an *f_id*, herein the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; and the *subframe_id* is an index number or a relative index number of a subframe at which the starting time domain resource of the occupied PRACH is located when the random access signaling is sent.

In the present embodiment, the *Specific RNTI* is calculated according to a following formula: *Specific_RNTI = a* × *frame_id* + *b* × *subframe_id* + *c* × *f_id* + *Offset* , herein, *a*, *b* and *c* are all integers equal to or greater than 0, and *Offset* is an offset configured by a system.

In the present embodiment, the CRC is scrambled in a following way:

$$a(i) = (CRC(i) + Specific\_RNTI(i)) \bmod 2, \quad \text{i=0,1,...,}C\text{-1,}$$

$$b(i) = (a(i) + Pseudo\_Seq(i)) \bmod 2, \quad \text{i=0,1,...,}C\text{-1,}$$

or

$$b(i) = (CRC(i) + Specific\_RNTI(i) + Pseudo\_Seq(i)) \bmod 2, \quad \text{i=0,1,...,}C\text{-1;}$$

herein, *CRC*(*i*) is the (i+1)th bit in the CRC, *Specific_RNTI*(*i*) is the (i+1)th bit in the *Specific_RNTI*, C is a length of bits of the CRC, sequences *Pseudo_Seq* corresponding to nodes of the third type belonging to different sets *P*(*j*) are different, and *b(i)* is the (i+1)th bit generated after the scrambling.

In the present embodiment, the method further includes:

scrambling the DCI in which the indication information of the random access responses of the node of the third type is included in the following way:

$$DCI(i) = (DCI(i) + Pseudo\_Seq(i)) \bmod 2, i = 0,1,\cdots,D-C-1,$$

$$DCI(i+D-C) = (DCI(i+D-C) + Specific\_RNTI(i)) \bmod 2, i = 0,1,\cdots,C-1;$$

herein, C is a length of bits of the CRC, D is a length of bits of the DCI, and sequences *Pseudo_Seq* corresponding to nodes of the third type belonging to different sets *P*(*j*) are different.

In the present embodiment, the method further includes: scrambling the DCI in which the indication information of the random access responses of the node of the third type is included in the following way: *d*(*i*) = (*DCI*(*i*) + *Pseudo_Seq*(*i*))*mod*2, *i* = 0,1,···, *D*-1, herein, *DCI*(*i*) represents the (i+1)th bit in the DCI, D is a length of bits of the DCI, sequences *Pseudo_Seq* corresponding to the nodes of the third type belonging to different sets *P*(*j*) are different, and *d(i)* is the (i+1)th bit generated after the scrambling.

In the present embodiment, the RA_RNTI used in the scrambling of the CRC is marked as *Specific_RNTI*, the *Specific_RNTI* is selected from a set of RNTIs marked as *reserve-RNTI-set*, herein elements in the *reserve-RNTI-set* are at least one of: a part of or all of RNTIs available to a node of a fourth type; a part of or all of RA_RNTIs available to the node of the fourth type; a part of or all of RNTIs allocated to the node of the second type; a part of or all of RA_RNTIs allocated to the node of the second type; and RA_RNTIs allocated to the node of the third type.

In the present embodiment, the RNTIs in the reserve-RNTI-sets corresponding to different nodes of the third type are different.

In the present embodiment, the *Specific_RNTI* is at least determined by a *frame id*, a *subframe_id*, an *f_id* and a *Subset_id*, herein, the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; the *subframe_id* is an index number or a relative index number of a subframe at which the starting time domain resource of the occupied PRACH is located when the random access signaling is sent; and the *Subset_id* is an index of a set *P(j)* at which the node of the third type is located, $0 \leq Subset\_id \leq J - 1$, and J is a positive integer equal to or greater than 1.

In the present embodiment, the *Specific RNTI* is calculated according to following formulas: *Specific_RNTI_Index* = mod(*a* x *frame_id* + *b* x *subframe_id* + *c* × *f_id* + *d* × *Subset* + *Offset, N*) , and, *Specific_RNTI* = *reserve - RNTI - set*(*Specific_RNTI_Index*), herein, *a, b, c* and *d* are all integers equal to or greater than 0; *Offset* $\geq 0$ is an offset configured by a system; N represents the number of the allocated *Specific_RNTIs*; *Specific_RNTI_Index* represents an index of the *Specific_RNTI* in the *reserve-RNTI-set*; and mod(*x, y*) represents an operation of taking a remainder from a division of x by y.

In the present embodiment, the *Specific RNTI* is calculated according to a following formula: *Specific_RNTI* = *a* × *frame_id* + *b* x *subframe_id* + *c* × *f_id* + *d* × *Subset_id* + *Offset* , herein *a, b, c* and *d* are all integers equal to or greater than 0, and *Offset* is an offset configured by a system.

In the present embodiment, after the node of the first type sends the DCI through the PDCCH or EPDCCH, the method further includes: decoding, by the node of the third type, the PDCCH or the EPDCCH in a preset time window to obtain the DCI, and calculating *CRC(i)* according to a following formula: *CRC(i)* = (*DCI(i + D - C)* + *Specific_RNTI(i)*) mod 2, i=0,1,...,*C*-1, herein, CRC(i) is the (i+1)th bit in the CRC, C is a length of bits of the CRC, and D is a length of bits of the DCI; and calculating the CRC for *DCI(i)*, $0 \leq i \leq D - C -1$ to obtain a C-bit CRC result $\widetilde{CRC(i)}$, $0 \leq i \leq C - 1$.

In the present embodiment, the method further include: determining, by the node of the third type, that the received DCI is the indication information of the random access response if *CRC(i)* is the same as $\widetilde{CRC(i)}$.

In the present embodiment, after the node of the third type determines that the received DCI is the indication information of the random access response, the method further includes: decoding, by the node of the third type, the indication information of the set in the indication information of the random access response; and decoding, the node of the third type, the random access response according to the resource position indication information in the random access response if a set to which the node of the third type belongs is contained in the indication information of the set.

In the present embodiment, after the node of the first type sends the DCI through the PDCCH or EPDCCH, the method further includes: decoding, by the node of the third type, the PDCCH or the EPDCCH in a preset time window to obtain the DCI, and calculating *CRC(i)* according to a following formula:

$$CRC(i) = (DCI(i + D - C) + Specific\_RNTI(i) + Pseudo\_Seq(i)) \bmod 2, \qquad i=0,1,\ldots,C\text{-}1,$$

herein, *CRC(i)* is the (i+1)th bit in the CRC, C is a length of bits of the CRC, and D is a length of bits of the DCI; and calculating the CRC for *DCI (i)*, $0 \leq i \leq D - C - 1$ to obtain a C-bit CRC result $\widetilde{CRC(i)}$, $0 \leq i \leq C - 1$.

In the present embodiment, after the node of the first type sends the DCI through the PDCCH or EPDCCH, the method further includes: decoding, by the node of the third type, the PDCCH or the EPDCCH in a preset time window to obtain the DCI, and calculating *CRC(i)* and $\widetilde{DCI(i)}$ according to following formulas:

$$CRC(i) = (DCI(i + D - C) + Specific\_RNTI(i)) \bmod 2, \quad i = 0,1,\cdots,C-1,$$

and $\widetilde{DCI(i)} = (DCI(i) + Pseudo\_Seq(i)) \bmod 2,$ *i* = 0,1, ⋯, *D - C* - 1; herein, C is a length of bits of the CRC, and D is a length of bits of the DCI; and calculating the CRC for the $\widetilde{DCI(i)}$ to obtain a C-bit CRC result $\widetilde{CRC(i)}$, $0 \leq i \leq C -1$.

In the present embodiment, after the node of the first type sends the DCI through the PDCCH or EPDCCH, the method further includes: decoding, by the node of the third type, the PDCCH or the EPDCCH in a preset time window to obtain the DCI, and calculating *CRC(i)* and $\widetilde{DCI(i)}$ according to following formulas:

$$\widetilde{DCI(i)} = (DCI(i) + Pseudo\_Seq(i)) \bmod 2, \ i = 0,1,\cdots,D-1,$$

and $CRC(i) = (\widetilde{DCI(i+D-C)} + Specific\_RNTI(i)) \bmod 2,$ $i = 0,1,\cdots, C$ - 1; herein, C is a length of bits of the CRC, and D is a length of bits of the DCI; and calculating the CRC for $\widetilde{DCI(i)}$ to obtain a C-bit CRC result $\widetilde{CRC(i)}$, $0 \le i \le C$ -1.

In the present embodiment, the method further includes: determining, by the node of the third type, that the received DCI is the indication information of the random access response if $CRC(i)$ is the same as $\widetilde{CRC(i)}$.

In the present embodiment, after the node of the third type determines that the received DCI is the indication information of the random access response, the method further incudes: decoding, by the node of the third type, the random access response according to the resource position indication information in the random access response.

In the present embodiment, after the node of the first type sends the DCI through the PDCCH or EPDCCH, the method further includes: decoding, by the node of the third type, the PDCCH or the EPDCCH in a preset time window to obtain the DCI, and calculating $CRC(i)$ according to a following formula:

$$CRC(i) = (DCI(i+D-C) + Specific\_RNTI(i)) \bmod 2, \quad i = 0,1,\ldots,C-1,$$

herein, CRC(i) is the (i+1)$^{th}$ bit in the CRC, C is a length of bits of the CRC, and D is a length of bits of the DCI; and calculating the CRC for $DCI(i)$, $0 \le i \le D$ - C - 1 to obtain a C-bit CRC result $\widetilde{CRC(i)}$, $0 \le i \le C$ - 1.

In the present embodiment, the method further includes: determining, by the node of the third type, that the received DCI is the indication information of the random access response if $CRC(i)$ is the same as $\widetilde{CRC(i)}$.

In the present embodiment, after the node of the third type determines that the received DCI is the indication information of the random access response, the method further includes: decoding, by the node of the third type, the random access response according to the resource position indication information in the random access response.

In the present embodiment, the node of the first type includes at least one of: macro cells, micro cells, pico cells, femto cells, home NodeBs, low-power node and relays.

In the present embodiment, the node of the second type includes at least one of: more than one terminals or terminal groups; more than one Machine Type Communication (MTC) terminals or MTC terminal groups; more than one Machine to Machine (M2M) terminals or M2M terminal groups; and more than one Device to Device (D2D) terminals or D2D terminal groups.

In the present embodiment, the node of the fourth type includes at least one of: terminals or terminal groups supported by an existing LTE/LTE-A standard; and terminals or terminal groups supported by LTE Release 11 and previous editions of the LTE Release 11.

In the present embodiment, the system is arranged by at least one of: a standard, a network, and a network high level.

According to another embodiment, an apparatus for transmitting a random access response is proviced, which is located in node of a first type, including: a sending module arranged to send indication information of a random access response of a node of a third type through a downlink channel, herein the indication information includes at least one of: indication information of a set to which the node of the third type belongs; and resource position indication information of the random access response of the node of the third type; herein the node of the third type is a node of a second type in one or more sets $P(j)$, $0 \le j \le J$ - 1, and J is a positive integer which is equal to or grater than 1.

In the present embodiment, the node of the first type includes at least one of: macro cells, micro cells, pico cells, femto cells, home NodeBs, low-power node and relays.

In the present embodiment, the node of the second type includes at least one of: more than one terminals or terminal groups; more than one Machine Type Communication (MTC) terminals or MTC terminal groups; more than one Machine to Machine (M2M) terminals or M2M terminal groups; and more than one Device to Device (D2D) terminals or D2D terminal groups.

Through the embodiments of the present invention, adopting the method in which the node of the first type sends the indication information of the random access response of the node of the third type through the downlink channel, herein the indication information includes at least one of: indication information of a set to which the node of the third type belongs, and resource position indication information of the random access response of the node of the third type, herein the node of the third type is a node of a second type in one or more sets $P(j)$, $0 \le j \le J$ -1, and J is a positive integer which is equal to or grater than 1, the problem in the related art of how to accurately transmit the random access response sent to different types of terminals is solved, the probability that the node of the third type detects the random access response correctly is improved, and the power consumption of the node of the third type is reduced.

Brief Description of Drawings

The accompanying drawings illustrated herein provide a further understanding of the present invention and form a part of the application, and exemplary embodiments of the present invention and the description thereof are intended to explain the present invention but are not to be construed as improper limitations to the present invention. In the accompanying drawings:

FIG. 1 is a flowchart of a method for transmitting a random access response according to an embodiment of the present invention;

FIG. 2 is a structure block diagram of an appratus for a transmitting random access response according to an embodiment of the present invention;

FIG. 3 is a schematic diagram of PRACH resource allocation according to a exemplary embodiment one of the present invention; and

FIG. 4 is a schematic diagram of PRACH resource allocation according to exemplary embodiments two to five of the present invention.

Preferred Embodiments of the Present Invention

The present invention will be described below in detail with reference to accompanying drawings and in conjunction with specific embodiments. It should be noted that the embodiments of the present invention and features thereof can be combined with each other in the case of no conflict.

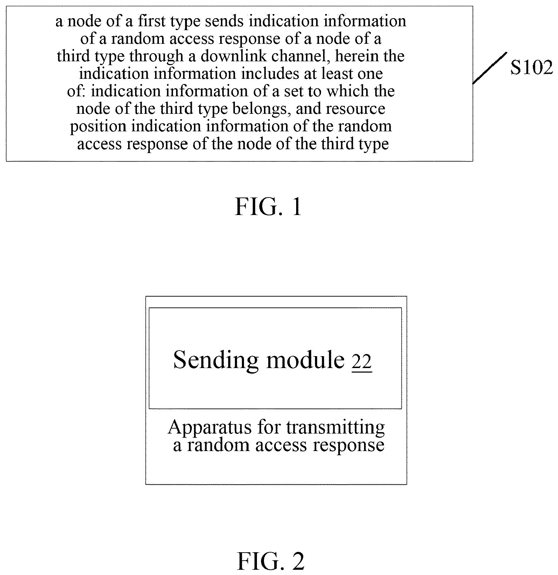

A method for transmitting a random access response is provided in an embodiment. FIG. 1 is a flowchart of a method for transmitting the random access response according to the embodiment of the present invention. As shown in FIG. 1, the method includes the following step:

Step 102: a node of a first type sends indication information of a random access response of node of a third type through a downlink channel, herein the indication information includes at least one of:

indication information of a set to which the node of the third type belongs; and
resource position indication information of the random access response of the node of the third type, herein the node of the third type is node of a second type in one or more sets $P(j)$, $0 \leq j \leq J - 1$, and J is a positive integer equal to or grater than 1.

In the embodiment, through the foregoing steps, the indication information of the random access response of the node of the third type is sent on the downlink channel, and the indication information includes indication information of a set to which the node of the third type belongs, and/or resource position indication information of the random access response of the node of the third type, such that the node of the third type can obtain the random access response sent to them accurately, thereby solving the problem in the related art of how to accurately transmit the random access response sent to different types of terminals, improving the probability that the node of the third type detects the random access response correctly, and reducing the power consumption of the node of the third type.

In the embodiment, before the node of the first type sends the indication information of the random access response of the node of the third type through the downlink channel, the node of the third type sends a random access signaling to the node of the first type on a PRACH.

In the embodiment, the nodes of the second type are divided into J sets $P(j)$ according to a predefined rule, herein $0 \leq j \leq J - 1$, and J is a positive integer equal to or grater than 1.

The predefined rule refers to at least one of the followings:

Times of repeatedly sending required by the node of the second type successfully decodes a physical broadcast channel (PBCH) are divided into J value intervals, and the node of the second type determines a set $P(j)$ to which the node of the second type belongs according to the interval at which the repeated times of the PBCH are located when the node of the second type successfully decodes the PBCH.

Times of repeatedly sending required by the node of the second type successfully decodes a main information block (MIB) are divided into J value intervals, and the node of the second type determines a set $P(j)$ to which the node of the second type belongs according to the interval at which the repeated times of the MIB are located when the node of the second type successfully decodes the MIB.

Times of repeatedly sending required by the node of the second type successfully decodes a system information block (SIB) are divided into J value intervals, and the node of the second type determines a set $P(j)$ to which the node of the second type belongs according to the interval at which the repeated times of the SIB are located when the node of the second type successfully decodes the SIB.

Times of repeatedly sending required by the node of the second type successfully decodes a primary synchronization signal (PSS) are divided into J value intervals, and the node of the second type determines a set $P(j)$ to which the node of the second type belongs according to the interval at which the repeated times of the PSS are located when the node of the second type successfully decodes the PSS.

Times of repeatedly sending required by the node of the second type successfully decodes a secondary synchronization signal (SSS) are divided into J value intervals, and the node of the second type determines a set $P(j)$ to which the node of the second type belongs according to the interval at which the repeated times of the SSS are located when the node of the second type successfully decodes the SSS.

A coverage enhanced target is divided into J value intervals, and the node of the second type determines a set $P(j)$ to which it belongs according to the interval at which the coverage enhanced target required to be supported is located.

A coverage enhanced target of a random access channel is divided into J value intervals, and the node of the second type determines a set $P(j)$ to which it belongs according to the interval at which the coverage enhanced target of the random access channel required to be supported is located.

Times of a message Msg1 required to be sent repeatedly are divided into J value intervals, and the node of the second type determines a set $P(j)$ to which it belongs according to the interval at which the times of requiring to send repeatedly the Msg1 required to be supported are located.

Times of a random access sequence required to be sent repeatedly are divided into J value intervals, and the node of the second type determines a set $P(j)$ to which it belongs according to the interval at which the times of requiring to send repeatedly the random access sequence required to be supported are located.

The signal quality of a predefined reference signal is divided into J value intervals, and the node of the second type measures the signal quality of the reference signal, and determines a set $P(j)$ to which the node of the second type belongs according to the interval at which the measured signal quality of the reference signal is located.

In the embodiment, the predefined reference signal is at least one of: a reference signal specific to a sector where the node of the second type is located, a reference signal specific to the node of the second type, a primary synchronization signal, a secondary synchronization signal and a channel status indication reference signal.

In the embodiment, the signal quality is at least one of: Reference Signal Received Power (RSRP), Reference Signal Received Quality (RSRP), Received Signal Strength Indicator (RSSI), path loss between the node of the second type and the node of the first type, downlink signal-to-noise ratio of the node of the second type and uplink signal-to-noise ratio of the node of the second type.

In the embodiment, when the indication information of the random access response includes the indication information of the set to which the node of the third type belongs, the indication information of the set is described using a bitmap.

In the embodiment, when the indication information of the random access response includes the indication information of the set to which the node of the third type belongs, the indication information of the set is described using $\lceil \log_2 J \rceil$ bits, herein $\lceil \rceil$ represents rounding up, that is, 2.1 is rounded up to 3, and 2.9 is rounded up to 3 as well.

In the embodiment, the indication information of the random access response of the node of the third type is contained in Downlink Control Information (abbreviated as DCI), a Cyclic Redundancy Check (abbreviated as a CRC) (which may be a C-bit CRC) is also included in the DCI, and is scrambled using a Random Access Radio Network Temporary Identity (abbreviated as RA_RNTI) (which may be a C-bit RA_RNTI), and the DCI is sent through a Physical Downlink Control Channel (PDCCH) or an Enhanced Physical Downlink Control Channel (EPDCCH).

The method of generating the RA_RNTI includes one of the following methods:

Generation method 1

The RA_RNTI used in the scrambling of the CRC is marked as Specific_RNTI, the Specific_RNTI is selected from a set of Radio Network Temporary Identities (RNTIs) marked as reserve-RNTI-set, herein elements in the reserve-RNTI-set are at least one of:

a part of or all of RNTIs available to node of a fourth type;

a part of or all of RA_RNTIs available to the node of the fourth type;
a part of or all of RNTIs allocated to the node of the second type; and
a part of or all of RA_RNTIs allocated to the node of the second type.

Further, the RA_RNTIs in the reserve-RNTI-set are different from the RNTIs allocated to the node of the fourth type.

In the embodiment, an index of the Specific_RNTI in the reserve-RNTI-set is at least determined by a frame_id, a subframe_id and an f_id, herein

the f_id is an index of a starting frequency domain resource of a PRACH occupied when random access signaling is sent;
the frame_id is an index number or a relative index number of a frame in which the starting time domain resource of the PRACH occupied when the random access signaling is sent is located; and
the subframe_id is an index number or a relative index number of a subframe in which the starting time domain resource of the PRACH occupied when the random access signaling is sent is located.

In the embodiment, the Specific_RNTI can be calculated according to the following formulas:

$$\text{Specific\_RNTI\_Index} = \text{mod}(a \times \text{frame\_id} + b \times \text{subframe\_id} + c \times \text{f\_id} + \text{Offset}, N),$$

and

$$\text{Specific\_RNTI} = \text{reserve-RNTI-set(Specific\_RNTI\_Index)},$$

herein a, b and c are all integers equal to or greater than 0; Offset is an offset configured for a system; N represents the number of the allocated Specific_RNTIs; Specific_RNTI_Index represents an index of the Specific_RNTI in the reserve-RNTI-set; and mod(x, y) represents an operation of calculating the remainder from a division of x by y.

Generation method 2

The RA_RNTI used in the scrambling of the CRC is marked as Specific_RNTI, and the Specific_RNTI is at least determined by a frame_id, a subframe_id and an f_id, herein

the f_id is an index of a starting frequency domain resource of a PRACH occupied when random access signaling is sent;
the frame_id is an index number or a relative index number of a frame in which the starting time domain resource of the PRACH occupied when the random access signaling is sent is located; and
the subframe_id is an index number or a relative index number of a subframe in which the starting time domain resource of the PRACH occupied when the random access signaling is sent is located.

In the embodiment, the Specific_RNTI can be calculated according to the following formulas:

$$\text{Specific\_RNTI} = a \times \text{frame\_id} + b \times \text{subframe\_id} + c \times \text{f\_id} + \text{Offset},$$

herein a, b and c are all integers equal to or greater than 0, and Offset is an offset configured for a system.

In the embodiment, the generation methods 1 and 2 can be evolved as follows.

The CRC in the DCI in which the indication information of the random access response of the node of the third type is included is scrambled in the following way:

$$a(i) = (CRC(i) + \text{Specific\_RNTI}(i)) \bmod 2, \quad i = 0, 1, \ldots, C-1,$$

$$b(i) = (a(i) + \text{Pseudo\_Seq}(i)) \bmod 2, \quad i = 0, 1, \ldots, C-1,$$

or

$$b(i) = (CRC(i) + \text{Specific\_RNTI}(i) + \text{Pseudo\_Seq}(i)) \bmod 2, \quad i = 0, 1, \ldots, C-1,$$

herein CRC(i) is the (i+1)th bit in the CRC, Specific_RNTI(i) is the (i+1)th bit in the Specific_RNTI, and C is the length of bits of the CRC;

Pseudo_Seq refers to a sequence, sequences Pseudo_Seq corresponding to the node of the third type belonging to different sets P(j) are different, for example, Pseudo_Seq may be a pseudorandom sequence, and the sequences Pseudo_Seq corresponding to the node of the third type belonging to different sets P(j) are different; and b(i) is the (i+1)th bit generated after the scrambling.

In the embodiment, the DCI in which the indication information of the random access response of the node of the third type is included is scrambled in the following way:

$$DCI(i)=(DCI(i)+Pseudo\_Seq(i))mod2, i = 0,1,\ldots, D\text{-}C\text{-}1,$$

and

$$DCI(i+D\text{-}C)=(DCI(i+D\text{-}C)+Specific\_RNTI(i))mod2, i=0,1,\ldots, C\text{-}1,$$

herein C is the length of bits of the CRC, and D is the length of bits of the DCI; and Pseudo_Seq refers to a sequence, sequences Pseudo_Seq corresponding to the node of the third type belonging to different sets P(j) are different, for example, Pseudo_Seq may be a pseudorandom sequence, and the sequences Pseudo_Seq corresponding to the node of the third type belonging to different sets P(j) are different.

In the embodiment, the DCI in which the indication information of the random access response of the node of the third type is included is scrambled in the following way:

$$d(i) = (DCI(i)+Pseudo\_Seq(i))mod2, i = 0,1,\ldots, D\text{-}C\text{-}1,$$

herein DCI(i) represents the (i+1)th bit in the DCI, and D is the length of bits of the DCI;

Pseudo_Seq refers to a sequence, sequences Pseudo_Seq corresponding to the node of the third type belonging to different sets P(j) are different, for example, Pseudo_Seq may be a pseudorandom sequence, and the sequences Pseudo_Seq corresponding to the node of the third type belonging to different sets P(j) are different; and d(i) is the (i+1)th bit generated after the scrambling

Generation method 3

The RA_RNTI used in the scrambling of the CRC is marked a Specific_RNTI, the Specific_RNTI is selected from a set of RNTIs marked as reserve-RNTI-set, herein elements in the reserve-RNTI-set are at least one of:

 a part of or all of RNTIs available to node of a fourth type;
 a part of or all of RA_RNTIs available to the node of the fourth type; a part of or all of RNTIs allocated to the node of the second type;
 a part of or all of RA_RNTIs allocated to the node of the second type; and
 RA_RNTIs allocated to the node of the third type.

In the embodiment, the RNTIs in the reserve-RNTI-sets corresponding to different node of the third type are different.

In the embodiment, the allocated Specific_RNTI is at least determined by a frame_id, a subframe_id, an f_id and a Subset_id,

herein the f_id is an index number of a starting frequency domain resource of a PRACH occupied when random access signaling is sent;

the frame_id is an index number or a relative index number of a frame in which the starting time domain resource of the PRACH occupied when the random access signaling is sent is located;

the subframe_id is an index number or a relative index number of a subframe in which the starting time domain resource of the PRACH occupied when the random access signaling is sent is located; and

the Subset_id represents an index of a set P(j) at which the node of the third type is located, 0≤Subset_id≤J-1, and J being a positive integer equal to or greater than 1.

In the embodiment, the Specific_RNTI can be calculated according to the following formulas:

$$\text{Specific\_RNTI\_Index}=\text{mod}(a\times\text{frame\_id}+b\times\text{subframe\_id}+c\times\text{f\_id}+d\times\text{Subset}+\text{Offset},N),$$

and

$$\text{Specific\_RNTI}=\text{reserve-RNTI-set}(\text{Specific\_RNTI\_Index}),$$

herein a, b, c and d are all integers equal to or greater than 0; Offset is an offset configured for a system, Offset$\geq$0; N represents the number of the allocated Specific_RNTIs; Specific_RNTI_Index represents an index of the Specific_RNTI in the reserve-RNTI-set; and mod(x, y) represents an operation of calculating the remainder from a division of x by y.

In the embodiment, the Specific_RNTI can be calculated according to the following formulas:

$$\text{Specific\_RNTI}=a\times\text{frame\_id}+b\times\text{subframe\_id}+c\times\text{f\_id}+d\times\text{Subset\_id}+\text{Offset},$$

herein a, b, c and d are all integers equal to or greater than 0, and Offset is an offset configured for a system.

Receiving methods corresponding to the sending methods for the foregoing scrambling generation methods is further provided in the embodiment. Specifically, the receiving methods are as follows.

A receiving method corresponding to generation methods 1 and 2 is as follows.

The node of the third type decodes the PDCCH or the EPDCCH in a preset time window to obtain the Downlink Control Information (DCI) and calculate CRC(i) according to the following formula:

$$\text{CRC}(i) = (\text{DCI}(i+D-C)+\text{Specific\_RNTI}(i))\text{mod}2, \; i = 0,\ldots,C-1,$$

herein CRC(i) represents the (i+1)th bit in the CRC, C is the length of bits of the CRC, and D is the length of bits of the DCI;

the CRC is calculated for DCI(i) ($0\leq i\leq D-C-1$) to obtain a C-bit CRC result $\widetilde{CRC(i)}$, $0\leq i\leq C-1$.

The node of the third type determines that the DCI received is the indication information of the random access response if CRC(i) is the same as $\widetilde{CRC(i)}$.

Then, the node of the third type decodes the indication information of the set in the indication information of the random access response; and the node of the third type decodes the random access response according to the resource position indication information in the random access response if a set to which the node of the third type belongs is contained in the indication information of the set.

A receiving method corresponding to the evolved sending method for the generation methods 1 and 2 is as follows;

The node of the third type decodes the PDCCH or the EPDCCH in a preset time window to obtain the DCI and calculates CRC(i) according to the following formula:

$$\text{CRC}(i)=(\text{DCI}(i+D-C)+\text{Specific\_RNTI}(i)+\text{Pseudo\_Seq}(i))\text{mod}2, \; i=0,\ldots,C-1,$$

herein CRC(i) represents the (i+1)th bit in the CRC, C is the length of bits of the CRC, and D is the length of bits of the DCI; and

the CRC is calculated for DCI(i) ($0\leq i\leq D-C-1$) to obtain a C-bit CRC result $\widetilde{CRC(i)}$, $0\leq i\leq C-1$.

In the embodiment, the node of the third type decodes the PDCCH or the EPDCCH in a preset time window to obtain the DCI and calculates CRC(i) and $\widetilde{DCI(i)}$ according to the following formulas:

$$\text{CRC}(i) = (\text{DCI}(i+D-C)+\text{Specific\_RNTI}(i))\text{mod}2, \; i = 0,\ldots,C-1,$$

and

$$\widetilde{DCI(i)} = \left(DCI(i) + Pseudo\_Seq(i)\right) \bmod 2, \quad i=0,1,\cdots,D-C-1,$$

herein C is the length of bits of the CRC, and D is the length of bits of the DCI; and

the CRC is calculated for the $\widetilde{DCI(i)}$ to obtain a C-bit CRC result $\widetilde{CRC(i)}$, $0 \le i \le C\text{-}1$.

In the embodiment, the node of the third type decodes the PDCCH or the EPDCCH in a preset time window to obtain the DCI and calculates CRC(i) and $\widetilde{DCI(i)}$ according to the following formulas:

$$\widetilde{DCI(i)} = \left(DCI(i) + Pseudo\_Seq(i)\right) \bmod 2, \quad i=0,1,\cdots,D-1,$$

and

$$CRC(i) = \left(\widetilde{DCI(i+D-C)} + Specific\_RNTI(i)\right) \bmod 2, \quad i=0,\cdots,C-1,$$

herein C is the length of bits of the CRC, and D is the length of bits of the DCI; and the CRC is calculated for $\widetilde{DCI(i)}$

to obtain a C-bit CRC result $\widetilde{CRC(i)}$, $0 \le i \le C\text{-}1$.

The node of the third type determines that the DCI received is the indication information of the random access response if CRC(i) is the same as $\widetilde{CRC(i)}$.

The node of the third type decodes the random access response according to the resource position indication information in the random access response.

A receiving method corresponding to the sending method for the generation method 3 is as follows.

The node of the third type decodes the PDCCH or the EPDCCH in a preset time window to obtain the DCI and calculates CRC(i) according to the following formula:

$$CRC(i)=(DCI(i+D-C)+Specific\_RNTI(i))\bmod 2, \quad i=0,\ldots, C-1,$$

herein CRC(i) represents the (i+1)th bit in the CRC, C is the length of bits of the CRC, and D is the length of bits of the DCI; and

the CRC is calculated for DCI(i) ($0 \le i \le D\text{-}C\text{-}1$) to obtain a C-bit CRC result $\widetilde{CRC(i)}$, $0 \le i \le C\text{-}1$.

The node of the third type decodes the PDCCH or the EPDCCH in a preset time window to obtain the DCI and calculates CRC(i) according to the following formula:

$$CRC(i)=(DCI(i+D-C)+Specific\_RNTI(i))\bmod 2, \quad i=0,\ldots,C-1,$$

herein CRC(i) represents the (i+1)th bit in the CRC, C is the length of bits of the CRC, and D is the length of bits of the DCI,

herein the CRC of DCI(i) ($0 \le i \le D\text{-}C\text{-}1$) is calculated to obtain a C-bit CRC check result $\widetilde{CRC(i)}$, herein $0 \le i \le C\text{-}1$.

The node of the third type determines that the DCI received is the indication information of the random access response if CRC(i) is the same as $\widetilde{CRC(i)}$.

The node of the third type further decodes the random access response according to the resource position indication information in the random access response.

In the embodiment, the node of the first type may include at least one of: macro cells, micro cells, pico cells, femto cells, home NodeBs, low-power node (LPN) and relays.

In the embodiment, the node of the second type may include at least one of:

more than one terminals or terminal groups;

more than one Machine Type Communication (MTC) terminals or MTC terminal groups;
more than one Machine to Machine (M2M) terminals or M2M terminal groups; and
more than one Device to Device D2D terminals or D2D terminal groups.

In the embodiment, the node of the fourth type may include at least one of: terminals or terminal groups supported by an existing LTE/LTE-A standard and terminals or terminal groups supported by LTE Release 11 and previous editions of the LTE Release 11, i.e., the existing terminals or terminal groups in the related art.

In the embodiment, the system may be configured by a standard or by a network or by a network high level.

Corresponding to the random access response described above, an apparatus for transmitting the random access response, located in the node of the first type, is further provided in an embodiment. The apparatus is configured to implement the foregoing embodiments and exemplary implementations, and what has been described above will not be repeated herein. The term "module", as used hereinafter, is a combination of software and/or hardware able to implement predetermined functions. Although apparatuses described in the following embodiments are implemented in software alternatively, the implementation of the apparatuses in hardware or a combination of software and hardware is also possible and conceivable.

FIG. 2 is a structure block diagram of an apparatus for transmitting a random access response according to an embodiment of the present invention. As shown in FIG. 2, the apparatus includes:

a sending module 22 configured to send indication information of a random access response of a node of a third type through a downlink channel, herein the indication information includes at least one of: indication information of a set to which the node of the third type belongs, and resource position indication information of the random access response of the node of the third type, herein the node of the third type is a node of a second type in one or more sets $P(j)$, $0 \leq j \leq J - 1$, and J is a positive integer equal to or grater than 1.

The node of the first type may include at least one of: macro cells, micro cells, pico cells, femto cells, home NodeBs, low-power node and relays.

The node of the second type may include at least one of: more than one terminals or terminal groups; more than one Machine Type Communication (MTC) terminals or MTC terminal groups; more than one Machine to Machine (M2M) terminals or M2M terminal groups; and more than one Device to Device D2D terminals or D2D terminal groups.

The present invention will be described below with reference to exemplary embodiments, which are illustrated in conjunction with the foregoing embodiments and the exemplary implementations thereof.

Embodiment 1: sending method 1

There are MTC UEs and non-MTC UEs (refered to as Legacy UEs) in wireless systems, and for the sake of cost, there are some MTC UEs with low cost. For example, the number of receiving antennas of terminals is reduced, baseband processing bandwidth of the terminals is descreased, peak rate supported by the terminals is descreased, and a half-duplex mode is adopted. However, the reduction of cost means the reduction of performance, thus, for such low-cost MTC UEs, some measures should be taken to make up the loss in performance. Moreover, considering that the MTC terminals may be located in basements, at wall corners or the like where the channel environment is very bad, some measures are required to be taken as well to make up the loss in the performance. Considering that magnitudes of the loss in the performance required to be remedied by the MTC UEs in different scenarios are different, the MTC UEs can be divided into different sets, and corresponding link enhancement is carried out for the MTC UEs in each set.

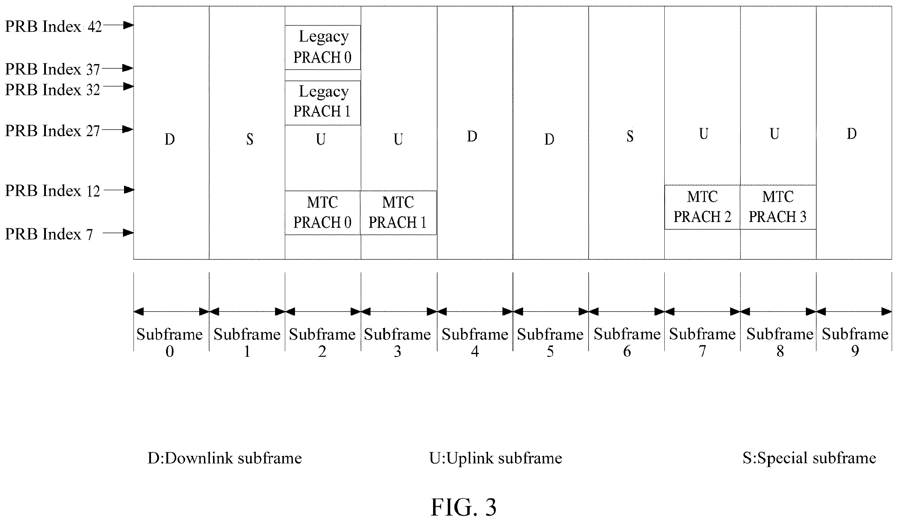

FIG. 3 is a schematic diagram of assignment of PRACH resources according to a exemplary embodiment one of the present invention. As shown in FIG. 3, MTC UEs are divided into J sets $P(j)$ according to a predefined rule, herein $0 \leq j \leq J - 1$, and J is a positive integer equal to or grater than 1.

The predefined rule is as follows: a Coverage Enhanced Target (CET) of a Random Access Channel (PRACH) is divided into J value intervals, and the MTC UEs determine a set $P(j)$ which they should belong to according to the interval in which the coverage enhanced target of the random access channel needing to be supported.

In the embodiment, the Max Coverage Enhanced Target (Max CET) of the PRACH is 15dB, and the MTC UEs are divided into 4 (J=4) sets, which are also called four Coverage Enhanced Levels (CELs), for example, the CET of the PRACH of the MTC UEs at CEL0 is 0dB, the CET of the PRACH of the MTC UEs at CEL1 is greater than 0dB but equal to or less than 5dB, the CET of the PRACH of the MTC UEs at CEL2 is greater than 5dB but equal to or less than 10dB, and the CET of the PRACH of the MTC UEs at CEL3 is greater than 10dB but equal to or less than 15dB.

A UE1 is an MTC UE at the CEL1, the allocated sending mode of a random access sequence is Preamble format 0, the sent random access sequence is Preamble 1 with a time domain length of 1 subframe and needing to be sent repeatedly for four times, and the Preamble 1 occupies uplink subframes subframe2, subframe3, subframe7 and subframe8 in the time domain and, as shown in FIG. 1, occupies six PRBs, PRB7-PRB12, in the frequency domain. For the UE1, the PRACH consists of four parts in total, MTC PRACH0, MTC PRACH1, MTC PRACH2 and MTC PRACH3, herein MTC PRACH0 is a starting PRACH resource. The UE1 repeatedly sends the random access sequence for four times on the PRACH in the mode Preamble format 0, that is, the UE1 sends random access signaling on the PRACH.

A UE2 is an Legacy UE, the allocated sending mode of the random access sequence is Preamble format 0, the sent random access sequence is also Preamble 1 with a time domain length of 1 subframe, and the Preamble 1 occupies an uplink subframe subframe2 in the time domain and, as shown in FIG. 1, occupies six PRBs, PRB37-PRB42, in the frequency domain. For the UE2, the PRACH is Legacy PRACH0 which is also a starting PRACH resource. The UE2 sends the random access sequence on the PRACH in the mode Preamble format 0, that is, the UE2 sends random access signaling on the PRACH.

An eNB detects, on the PRACH, all random access signaling that may be sent, and once the eNB detects that there is random access signaling being sent, the eNB will send a random access response (RAR) to responde to the detected random access signaling, herein the response to one or more random access signaling is contained in the RAR.

In the embodiment, the eNB detects that there are a plurality of MTC UEs, including the UE1, which have sent the random access signaling, and indication information of the RAR will be carried by the eNB in Downlink Control Information (DCI) sent by a Physical Downlink Control Channel (PDCCH).

Resource position indication information of the RAR in a Physical Downlink Shared Channel (PDSCH) is also included in the indication information.

Moreover, a 16-bit Cyclic Redundancy Check (CRC) is also included in the DCI, and the CRC is further scrambled using a 16-bit Random Access Radio Network Temporary Identity (RA_RNTI) in the following way:

$$g_k=(e_k+f_k)\bmod 2 \quad k = 0,1,\ldots,15$$

herein $e_k$ represents the (k+1)th bit in the CRC, $f_k$ represents the (k+1)th bit in the RA_RNTI, and $g_k$ represents the (k+1)th bit generated after the scrambling.

For the legacy UE, RA_RNTI=1+t_id+10*f_id, herein t_id(0≤t_id<10) is an index of a subframe in which the starting resource of the PRACH is located. In the embodiment, since there are only two Legacy PRACH resources, a Legacy PRACH0 and a Legacy PRACH1, in the uplink subframe subframe2, the f_id of the Legacy PRACH0 is 0, and the f_id of the Legacy PRACH1 is 1. Since the UE2 selects the Legacy PRACH0, for the UE2, f_id=0.

For the MTC UE, in the embodiment, since there is only one MTC PRACH resource in the frequency domain, for the starting frequency domain resource MTC PRACH0 selected by the UE1, f_id=0. If the RA_RNTIs of the MTC UEs are calculated according to the formula RA_RNTI=1+t_id+10*f_id of the legacy UE, then RA_RNTIs calculated by the UE1 and the UE2 are the same.

Because the indication information of the RAR of the UE2 is not contained in the DCI, if the eNB still scrambles the CRC using the RA_RNTI of the legacy UE, then the UE2 will wrongly think that the indication information of its RAR is included in the DCI, and similarly, if the indication information of the RAR carried in the DCI is sent to the legacy UE, the MTC UEs will wrongly detect the indication information.

To avoid the occurrence of the erroneous detection, a formula for generating the RA_RNTIs is required to be redesigned for the MTC UEs.

In the embodiment, the RA_RNTIs allocated to the MTC UEs are selected from a set reserve-RNTI-set and marked as Specific_RNTI. Elements in the reserve-RNTI-set are different from the RA_RNTIs allocated to the legacy UEs, and may be at least one of:

a part of or all of RNTIs available to the legacy UEs;

a part of or all of RA_RNTIs available to the legacy UEs;

a part of or all of RNTIs allocated to the MTC UEs; and

a part of or all of RA_RNTIs allocated to the MTC UEs.

The Specific_RNTI can be calculated according to the following formulas:

$$\text{Specific\_RNTI\_Index}=\bmod(a\times\text{frame\_id}+b\times\text{subframe\_id}+c\times\text{f\_id}+\text{Offset},N)+1,$$

and

$$\text{Specific\_RNTI=reserve-RNTI-set(Specific\_RNTI\_Index)},$$

herein Specific_RNTI Index represents an index of the Specific_RNTI in the reserve-RNTI-set;

f_id is a frequency domain index of the starting PRACH resource occupied by the MTC UE when sending the random access signaling, $0 \le$ f_id$<$f_Num, and f_Num being the maximum number of all the PRACH resources that can be supported simultaneously in the frequency domain;

frame_id represents a relative index number of a frame in which the starting PRACH resource occupied by the MTC UE when sending the random access signaling is located, frame_id=mod(Frame_ID, Frame_Period), herein Frame_ID represents an index number of a frame in which the starting PRACH resource occupied by the MTC UE when sending the random access signaling is located, and Frame_Period represents the period of the frame_id;

subframe_id represents an index number of a subframe in which the starting PRACH resource occupied by the MTC UE when sending the random access signaling is located, $0 \le$ subframe_id$<$10;

a, b and c are all integers equal to or greater than 0;

Offset is an offset configured for a system;

N represents the total number of the RA_RNTIs allocated to the MTC UEs; and

mod(x, y) represents an operation of calculating the remainder from a division of x by y.

In an alternative configuration:

$$a=10, b=1, c=10\times\text{Frame\_Period, and Offset}=0;$$

$$\text{Specific\_RNTI\_Index=mod}(10\times\text{frame\_id}+\text{subframe\_id}+10\times\text{Frame\_Period}\times\text{f\_id},N)+1;$$

and

$$\text{Specific\_RNTI=reserve-RNTI-set(Specific\_RNTI\_Index)}.$$

In the embodiment, the indication information (also referred to as Coverage Enhanced Level information in the present embodiment) of the set to which the MTC UEs detected by the eNB belong is also included by the eNB in the indication information of the RAR carried in the DCI. Because J = 4, an index of the set to which the MTC UEs belong, included in the indication information, can be described using 2 bits. For example, "01" indicates that the index of the set to which the MTC UEs belong, included in the indication information by the eNB, is 1, that is, the coverage enhanced level is CEL1.

After completing the sending of the random access signaling, the UE1 will detect the indication information of the RAR in a predefined time window. The UE1 first decodes the PDCCH to obtain Downlink Control Information (DCI) and calculates CRC(i) according to the following formula:

$$\text{CRC(i)=(DCI(i+D-C)+Specific\_RNTI(i))mod2}, i = 0,\dots,C-1,$$

herein CRC(i) represents the (i+1)th bit in the CRC, C is the length of bits of the CRC, and D is the length of bits of the DCI; and

the CRC is calculated for DCI(i) ($0 \le$ i$\le$D-C-1) to obtain a C-bit CRC result $\widetilde{CRC(i)}$, $0 \le$ i$\le$C-1.

The UE1 determines that the DCI received is the indication information of the RAR if CRC(i) is the same as $\widetilde{CRC(i)}$, then the UE1 continues to decode the indication information of the set in the indication information of the RAR. If the coverage enhanced level information of the UE1 is contained in the indication information of the set, then the UE1 further decodes the random access response in the PDSCH according to the resource position indication information of the RAR.

Apart from the foregoing examples given in the embodiment, the predefined rule may also be one of:

times a physical broadcast channel (PBCH) needs to be sent repeatedly till the MTC UEs successfully decode the PBCH are divided into J value intervals, and the MTC UEs determine a set *P(j)* to which they belong according to the interval in which the times the PBCH is sent repeatedly are located till the MTC UEs successfully decode the PBCH;

times a main information block (MIB) needs to be sent repeatedly till the MTC UEs successfully decode the MIB are divided into J value intervals, and the MTC UEs determine a set $P(j)$ to which they belong according to the interval in which the times the MIB is sent repeatedly are located till the MTC UEs successfully decode the MIB;

times a system information block (SIB) needs to be sent repeatedly till the MTC UEs successfully decode the SIB are divided into J value intervals, and the MTC UEs determine a set $P(j)$ to which they belong according to the interval in which the times the SIB is sent repeatedly are located till the MTC UEs successfully decode the SIB;

times a primary synchronization signal (PSS) needs to be sent repeatedly till the MTC UEs successfully decode the PSS are divided into J value intervals, and the MTC UEs determine a set $P(j)$ to which they belong according to the interval in which the times the PSS is sent repeatedly are located till the MTC UEs successfully decode the PSS;

times a secondary synchronization signal (SSS) needs to be sent repeatedly till the MTC UEs successfully decode the SSS are divided into J value intervals, and the MTC UEs determine a set $P(j)$ to which they belong according to the interval in which the times the SSS is sent repeatedly are located till the MTC UEs successfully decode the SSS;

a coverage enhanced target is divided into J value intervals, and the MTC UEs determine a set $P(j)$ to which they belong according to the interval in which the coverage enhanced target that needs to be supported is located;

times a message Msg1 needs to be sent repeatedly are divided into J value intervals, and the MTC UEs determine a set $P(j)$ to which they belong according to the interval in which the times the Msg1 needing to be supported is sent repeatedly are located; and

times a random access sequence needs to be sent repeatedly are divided into J value intervals, and the MTC UEs determine a set $P(j)$ to which they belong according to the interval in which the times the the random access sequence needing to be supported is sent repeatedly are located.

Apart from the formulas used in the embodiment, the Specific_RNTI may also be calculated according to the following formulas:

$$\text{Specific\_RNTI\_Index} = 1 + a \times \text{frame\_id} + b \times \text{subframe\_id} + c \times \text{f\_id} + \text{Offset},$$

and

$$\text{Specific\_RNTI} = \text{reserve-RNTI-set}(\text{Specific\_RNTI\_Index}),$$

 herein Specific_RNTI Index represents an index of the Specific_RNTI in the reserve-RNTI-set;
f_id is a frequency domain index of the starting PRACH resource occupied by the MTC UE when sending the random access signaling, $0 \leq \text{f\_id} < \text{f\_Num}$, and f_Num being the maximum number of all the PRACH resources that can simultaneously in the frequency domain;
frame_id represents a relative index number of a frame in which the starting PRACH resource occupied by the MTC UE when sending the random access signaling is located, $\text{frame\_id} = \text{mod}(\text{Frame\_ID}, \text{Frame\_Period})$, herein Frame_ID represents an index number of a frame in which the starting PRACH resource occupied by the MTC UE when sending the random access signaling is located, Frame_Period represents the period of the frame_id, and $\text{mod}(x, y)$ represents an operation of calculating the remainder from a division of x by y;
subframe_id represents an index number of a subframe in which the starting PRACH resource occupied by the MTC UE when sending the random access signaling is located, $0 \leq \text{subframe} \leq \text{id} < 10$;
a, b and c are all integers equal to or greater than 0; and
Offset is an offset configured for a system;

$$\text{Alternatively, } a = 10, b = 1, c = 10 \times \text{Frame\_Period, and Offset} = 0,$$

$$\text{Specific\_RNTI\_Index} = 1 + 10 \times \text{frame\_id} + \text{subframe\_id} + 10 \times \text{Frame\_Period} \times \text{f\_id},$$

and

$$\text{Specific\_RNTI} = \text{reserve-RNTI-set}(\text{Specific\_RNTI\_Index}).$$

Embodiment 2: sending method 2

There are MTC UEs and non-MTC UEs (referred as Legacy UEs) in wireless systems, and for the sake of cost, there are some MTC UEs with low cost. For example, the number of receiving antennas of terminals is reduced, baseband processing bandwidth of the terminals is descreased, peak rate supported by the terminals is descreased, and a half-duplex mode is adopted. However, the reduction of cost means the reduction of performance, thus, for such low-cost MTC UEs, some measures should be taken to make up the loss in performance. Moreover, considering that the MTC terminals may be located in basements, at wall corners or the like where the channel environment is very bad, some measures are required to be taken as well to make up the loss in the performance. Considering that magnitudes of the loss in the performance required to be remedied by the MTC UEs in different scenarios are different, the MTC UEs can be divided into different sets, and corresponding link enhancement is carried out for the MTC UEs in each set.

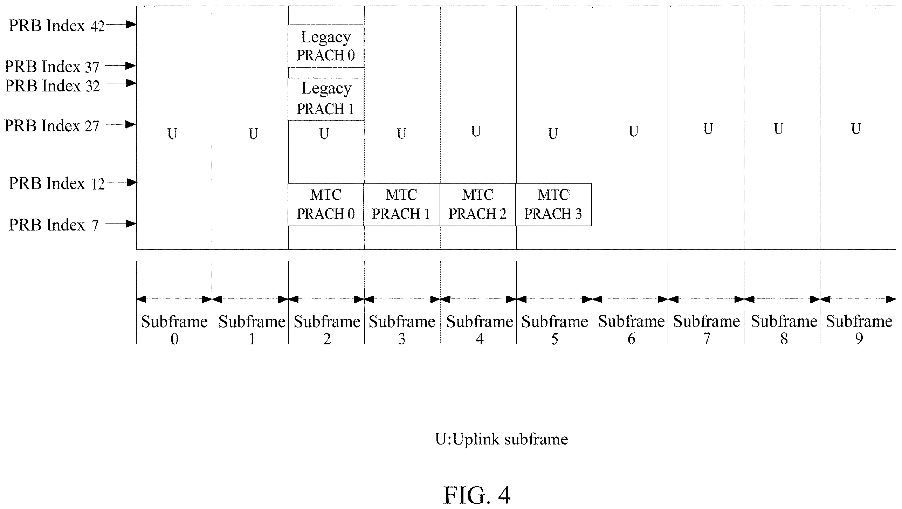

FIG. 4 is a schematic diagram of assignment of PRACH resources according to exemplary embodiments two to five of the present invention. As shown in FIG. 4, MTC UEs are divided into J sets $P(j)$ according to a predefined rule, herein $0 \leq j \leq J - 1$, and J is a positive integer equal to or grater than 1.

The predefined rule is as follows: the signal quality of a predefined reference signal is divided into J value intervals, and the MTC UEs measure the signal quality of the reference signal and determine a set $P(j)$ to which the MTC UEs belong according to the interval in which the measured signal quality of the reference signal is located. In the embodiment, the predefined reference signal is a primary synchronization signal, and the signal quality of the reference signal is Reference Signal Received Power (RSRP).

In the embodiment, J = 4, that is, the MTC UEs are divided into four sets: P(0), P(1), P(2) and P(3). A UE1 is an MTC UE belonging to P(1), the allocated sending mode of a random access sequence is Preamble format 0, the sent random access sequence is Preamble 1 with a time domain length of 1 subframe and needing to be sent repeatedly for four times, and the Preamble 1 occupies uplink subframes subframe2, subframe3, subframe4 and subframe5 in the time domain and, as shown in FIG. 2, occupies six PRBs, PRB7-PRB12, in the frequency domain. For the UE1, the PRACH consists of four parts in total, MTC PRACH0, MTC PRACH1, MTC PRACH2 and MTC PRACH3, herein MTC PRACH0 is a starting PRACH resource. The UE1 repeatedly sends the random access sequence for four times on the PRACH in the mode Preamble format 0, that is, the UE1 sends random access signaling on the PRACH.

A UE2 is an Legacy UE, the allocated sending mode of the random access sequence is Preamble format 0, the sent random access sequence is also Preamble 1 with a time domain length of 1 subframe, and the Preamble 1 occupies an uplink subframe subframe2 in the time domain and, as shown in FIG. 2, occupies six PRBs, PRB37-PRB42, in the frequency domain. For the UE2, the PRACH is Legacy PRACH0 which is also a starting PRACH resource. The UE2 sends the random access sequence on the PRACH in the mode Preamble format 0, that is, the UE2 sends random access signaling on the PRACH.

An eNB detects, on the PRACH, all random access signaling that may be sent, and once the eNB detects that there is random access signaling being sent, the eNB will send a random access response (RAR) to responde to the detected random access signaling, herein the response to one or more random access signaling is contained in the RAR.

In the embodiment, the eNB detects that there are a plurality of MTC UEs, including the UE1, which have sent the random access signaling, and indication information of the RAR will be carried by the eNB in Downlink Control Information (DCI) sent by a Physical Downlink Control Channel (PDCCH).

Resource position indication information of the RAR in a Physical Downlink Shared Channel (PDSCH) is also included in the indication information.

Moreover, a 16-bit Cyclic Redundancy Check (CRC) is also included in the DCI, and the CRC is further scrambled using a 16-bit Random Access Radio Network Temporary Identity (RA_RNTI) in the following way:

$$g_k = (e_k + f_k) \bmod 2 \quad k = 0,1,\ldots,15$$

herein $e_k$ represents the (k+1)th bit in the CRC, $f_k$ represents the (k+1)th bit in the RA_RNTI, and $g_k$ represents the (k+1)th bit generated after the scrambling.

For the legacy UE, RA_RNTI=1+t_id+10*f_id, herein t_id(0≤t_id<10) is an index of a subframe in which the starting resource of the PRACH is located. In the embodiment, since there are only two Legacy PRACH resources, a Legacy PRACH0 and a Legacy PRACH1, in the uplink subframe subframe2, the f_id of the Legacy PRACH0 is 0, and the f_id of the Legacy PRACH1 is 1. Since the UE2 selects the Legacy PRACH0, for the UE2, f_id=0.

For the MTC UE, in the embodiment, since there is only one MTC PRACH resource in the frequency domain, for the starting frequency domain resource MTC PRACH0 selected by the UE1, f_id=0. If the RA_RNTIs of the MTC UEs are calculated according to the formula RA_RNTI=1+t_id+10*f_id of the legacy UE, then RA_RNTIs calculated by the UE1 and the UE2 are the same.

Because the indication information of the RAR of the UE2 is not contained in the DCI, if the eNB still scrambles the CRC using the RA_RNTI of the legacy UE, then the UE2 will wrongly think that the indication information of its RAR is included in the DCI, and similarly, if the indication information of the RAR carried in the DCI is sent to the legacy UE, the MTC UEs will wrongly detect the indication information.

To avoid the occurrence of the erroneous detection, a formula for generating the RA_RNTIs is required to be redesigned for the MTC UEs.

In the embodiment, the RA_RNTIs allocated to the MTC UEs are different from the RA_RNTIs allocated to the legacy UEs.

The Specific_RNTI can be calculated according to the following formula:

$$\text{Specific\_RNTI} = 1 + a \times \text{frame\_id} + b \times \text{subframe\_id} + c \times \text{f\_id} + \text{Offset},$$

herein f_id is a frequency domain index of the starting PRACH resource occupied by the MTC UE when sending the random access signaling;

frame_id represents a relative index number of a frame in which the starting PRACH resource occupied by the MTC UE when sending the random access signaling is located, frame_id=mod(Frame_ID, Frame_Period), herein Frame_ID represents an index number of a frame in which the starting PRACH resource occupied by the MTC UE when sending the random access signaling is located, Frame_Period represents the period of the frame_id and can be configured to be the number of frames occupied by an RAR detection time window, and mod(x, y) represents an operation of calculating the remainder from a division of x by y;

subframe_id represents an index number of a subframe in which the starting PRACH resource occupied by the MTC UE when sending the random access signaling is located, 0≤subframe_id<10;

a, b and c are all integers equal to or greater than 0; and

Offset is an offset configured for a system.

In a first exemplary configuration,

0≤f_id<f_Num, and f_Num is the maximum number of the MTC PRACH resources that can be supported simultaneously in the frequency domain;

$$0 \le \text{subframe\_id} < 10;$$

$$0 \le \text{subframe\_id} < \text{Frame\_Period};$$

$$a = 10, b = 1, c = 10 \times \text{Frame\_Period};$$

and $\text{Offset} = N_{RA-RNTI}^{LegacyUE}$ Offset represents the total number of the RA_RNTIs allocated to the legacy UEs;

Then

$$Specific\_RNTI = 1 + 10 \times frame\_id + subframe\_id + 10 \times Frame\_Period \times f\_id$$

In a second exemplary configuration,

Max f_id$_{LegacyUE}$≤f_id<f_Num+Max f_id$_{LegacyUE}$, herein f_Num is the maximum number of all the MTC PRACH resources that can be supported simultaneously in the frequency domain; Max f_id$_{LegacyUE}$ is the maximum number of legacy PRACH resources that can be supported simultaneously in the frequency domain;

$$0 \le \text{subframe\_id} < 10;$$

$$0 \le \text{subframe\_id} < \text{Frame\_Period};$$

$$A=10, b=1, c=10 \times \text{Frame\_Period};$$

and

$$\text{Offset}=0;$$

then

$$\text{Specific\_RNTI}=1+10 \times \text{frame\_id} + \text{subframe\_id} + 10 \times \text{Frame\_Period} \times \text{f\_id}.$$

In the embodiment, the indication information of the set to which the MTC UEs belong detected by the eNB is also included by the eNB in the indication information of the RAR carried in the DCI. Because J = 4, an index of the set to which the MTC UEs belong included in the indication information can be described through a 4-bit bitmap. For example, "0011" indicates that sets to which the MTC UEs belong included in the indication information by the eNB are P(0) and P(1).

After completing the sending of the random access signaling, the UE1 will detect the indication information of the RAR in a predefined time window. The UE1 first decodes the PDCCH to obtain the Downlink Control Information (DIC) and calculates CRC(i) according to the following formula:

$$\text{CRC(i)}=(\text{DCI(i+D-C)}+\text{Specific\_RNTI(i))mod2}, i = 0,\dots,C\text{-}1,$$

herein CRC(i) represents the (i+1)th bit in the CRC, C is the length of bits of the CRC, and D is the length of bits of the DCI; and

the CRC is calculated for DCI(i) ($0 \le i \le D\text{-}C\text{-}1$) to obtain a C-bit CRC result $\widetilde{CRC(i)}$, $0 \le i \le C\text{-}1$.

The UE1 determines that the DCI received is the indication information of the RAR if CRC(i) is the same as $\widetilde{CRC(i)}$, then the UE1 continues to decode the indication information of the set in the indication information of the RAR. If the coverage enhanced level information of the UE1 is contained in the indication information of the set, then the UE1 further decodes the random access response in the PDSCH according to the resource position indication information of the RAR.

Apart from the foregoing examples given in the embodiment, the predefined reference signal may also be at least one of:

a reference signal specific to a sector;
a reference signal specific to the UE;
a primary synchronization signal;
a secondary synchronization signal; and
a channel status indication reference signal.

Apart from the foregoing examples given in the embodiment, the signal quality may also be at least one of:

Reference Signal Received Power (RSRP);
Reference Signal Received Quality (RSRP);
Received Signal Strength Indicator (RSSI);
path loss between the eNB and the UE;
signal-to-noise ratio of the downlink from the eNB to the UE; and
signal-to-noise ratio of the uplink from the UE to the eNB.

Embodiment 3: an evolved scheme of sending methods 1 and 2

There are MTC UEs and non-MTC UEs (referred as Legacy UEs) in wireless systems, and for the sake of cost, there are some MTC UEs with low cost. For example, the number of receiving antennas of terminals is reduced, baseband processing bandwidth of the terminals is descreased, peak rate supported by the terminals is descreased, and a half-duplex mode is adopted. However, the reduction of cost means the reduction of performance, thus, for such low-cost MTC UEs, some measures should be taken to make up the loss in performance. Moreover, considering that the MTC terminals may be located in basements, at wall corners or the like where the channel environment is very bad, some measures are required to be taken as well to make up the loss in the performance. Considering that magnitudes of the loss in the performance required to be remedied by the MTC UEs in different scenarios are different, the MTC UEs can be divided into different sets, and corresponding link enhancement is carried out for the MTC UEs in each set.

As shown in FIG. 4, in the embodiment, MTC UEs are divided into J sets $P(j)$ according to a predefined rule, herein $0 \leq j \leq J - 1$, and J is a positive integer equal to or grater than 1

The predefined rule is as follows: the signal quality of a predefined reference signal is divided into J value intervals, and the MTC UEs measure the signal quality of the reference signal and determine a set $P(j)$ to which the MTC UEs belong according to the interval in which the measured signal quality of the reference signal is located. In the embodiment, the predefined reference signal is a primary synchronization signal, and the signal quality of the reference signal is Reference Signal Received Power (RSRP).

In the embodiment, J = 4, that is, the MTC UEs are divided into four sets: P(0), P(1), P(2) and P(3). A UE1 is an MTC UE belonging to P(1), the allocated sending mode of a random access sequence is Preamble format 0, the sent random access sequence is Preamble 1 with a time domain length of 1 subframe and needing to be sent repeatedly for four times, and the Preamble 1 occupies uplink subframes subframe2, subframe3, subframe4 and subframe5 in the time domain and, as shown in FIG. 2, occupies six PRBs, PRB7-PRB12, in the frequency domain. For the UE1, the PRACH consists of four parts in total, MTC PRACH0, MTC PRACH1, MTC PRACH2 and MTC PRACH3, herein MTC PRACH0 is a starting PRACH resource. The UE1 repeatedly sends the random access sequence for four times on the PRACH in the mode Preamble format 0, that is, the UE1 sends random access signaling on the PRACH.

A UE2 is an Legacy UE, the allocated sending mode of the random access sequence is Preamble format 0, the sent random access sequence is also Preamble 1 with a time domain length of 1 subframe, and the Preamble 1 occupies an uplink subframe subframe2 in the time domain and, as shown in FIG. 2, occupies six PRBs, PRB37-PRB42, in the frequency domain. For the UE2, the PRACH is Legacy PRACH0 which is also a starting PRACH resource. The UE2 sends the random access sequence on the PRACH in the mode Preamble format 0, that is, the UE2 sends random access signaling on the PRACH.

An eNB detects, on the PRACH, all random access signaling that may be sent, and once the eNB detects that there is random access signaling being sent, the eNB will send a random access response (RAR) to responde to the detected random access signaling, herein the response to one or more random access signaling is contained in the RAR.

In the embodiment, the eNB detects that there are a plurality of MTC UEs, including the UE1, which have sent the random access signaling, and indication information of the RAR will be carried by the eNB in Downlink Control Information (DCI) sent by a Physical Downlink Control Channel (PDCCH).

Resource position indication information of the RAR in a Physical Downlink Shared Channel (PDSCH) is also included in the indication information.

Moreover, a 16-bit Cyclic Redundancy Check (CRC) is also included in the DCI, and the CRC is further scrambled using a 16-bit Random Access Radio Network Temporary Identity (RA_RNTI) in the following way:

$$g_k = (e_k + f_k) \bmod 2 \quad k = 0, 1, \ldots, 15$$

herein $e_k$ represents the (k+1)th bit in the CRC, fk represents the (k+1)th bit in the RA_RNTI, and $g_k$ represents the (k+1)th bit generated after the scrambling.

For the legacy UE, RA_RNTI=1+t_id+10*f_id, herein t_id($0 \leq$ t_id<10) is an index of a subframe in which the starting resource of the PRACH is located. In the embodiment, since there are only two Legacy PRACH resources, a Legacy PRACH0 and a Legacy PRACH1, in the uplink subframe subframe2, the f_id of the Legacy PRACH0 is 0, and the f_id of the Legacy PRACH1 is 1. Since the UE2 selects the Legacy PRACH0, for the UE2, f_id=0.

For the MTC UE, in the embodiment, since there is only one MTC PRACH resource in the frequency domain, for the starting frequency domain resource MTC PRACH0 selected by the UE1, f_id=0. If the RA_RNTIs of the MTC UEs are calculated according to the formula RA_RNTI=1+t_id+10*f_id of the legacy UE, then RA_RNTIs calculated by the UE1 and the UE2 are the same.

Because the indication information of the RAR of the UE2 is not contained in the DCI, if the eNB still scrambles the CRC using the RA_RNTI of the legacy UE, then the UE2 will wrongly think that the indication information of its RAR is included in the DCI, and similarly, if the indication information of the RAR carried in the DCI is sent to the legacy UE, the MTC UEs will wrongly detect the indication information.

To avoid the occurrence of the erroneous detection, a formula for generating the RA_RNTIs is required to be redesigned for the MTC UEs.

In the embodiment, the RA_RNTIs allocated to the MTC UEs are marked as Specific_RNTI, and the method for calculating the Specific_RNTI is determined according to embodiment 1 or 2.

In the embodiment, the DCI (including the indication information of the RAR and the CRC) is scrambled using new formulas, specifically including:

$$a(i)=(CRC(i)+Specific\_RNTI(i))\bmod 2, i = 0,1,\ldots,C\text{-}1,$$

and

$$b(i)=(a(i)+Pseudo\_Seq(i))\bmod 2, i = 0,1,\ldots,C\text{-}1,$$

or

$$b(i)=(CRC(i)+Specific\_RNTI(i)+Pseudo\_Seq(i))\bmod 2, i=0,1,\ldots,C\text{-}1,$$

herein CRC(i) is the (i+1)th bit in the CRC, Specific_RNTI(i) is the (i+1)th bit in the Specific_RNTI, and C is the length of bits of the CRC; Pseudo_Seq represents a pseudorandom sequence, and Pseudo_Seqs corresponding to the node of the third type belonging to different sets $P(j)$ are different; and
b(i) is the (i+1)th bit generated after the scrambling.

After completing the sending of the random access signaling, the UE1 will detect the indication information of the RAR in a predefined time window. The UE1 first decodes the PDCCH to obtain the Downlink Control Information (DIC) and calculates CRC(i) according to the following formula:

$$CRC(i)=(DCI(i+D\text{-}C)+Specific\_RNTI(i)+Pseudo\_Seq(i))\bmod 2, i=0,\ldots,C\text{-}1,$$

herein CRC(i) represents the (i+1)th bit in the CRC, C is the length of bits of the CRC, and D is the length of bits of the DCI; and

the CRC is calculated for DCI(i) ($0 \leq i \leq D\text{-}C\text{-}1$) to obtain a C-bit CRC result $\widetilde{CRC(i)}$, $0 \leq i \leq C\text{-}1$.

The UE1 determines that the DCI received is the indication information of the RAR if CRC(i) is the same as $\widetilde{CRC(i)}$, then the UE1 decodes the random access response in the PDSCH according to the resource position indication information of the RAR.

Apart from the examples given in the embodiment, the DCI (including the indication information of the RAR and the CRC) can also be scrambled using the following formulas, specifically including:

$$DCI(i)=(DCI(i)+Pseudo\_Seq(i))\bmod 2, i = 0,1,\ldots,D\text{-}C\text{-}1,$$

and

$$DCI(i+D\text{-}C)=(DCI(i+D\text{-}C)+Specific\_RNTI(i))\bmod 2, i=0,1,\ldots,C\text{-}1,$$

herein C is the length of bits of the CRC, and D is the length of bits of the DCI;
Pseudo_Seq represents a pseudorandom sequence, herein Pseudo_Seqs corresponding to different sets $P(j)$ are different.
After completing the sending of the random access signaling, the UE1 will detect the indication information of the RAR in a predefined time window. The UE1 first decodes the PDCCH to obtain Downlink Control Information (DCI) and calculates CRC(i) and $\overline{\widetilde{CRC(i)}}$ according to the following formula:

$$CRC(i)=(DCI(i+D\text{-}C)+Specific\_RNTI(i))\bmod 2, \ i = 0,\ldots,C\text{-}1,$$

and

$$\overline{\widetilde{DCI(i)}} = \left(DCI(i) + Pseudo\_Seq(i)\right)\bmod 2, \ \ i{=}0,1,\cdots,D-C-1$$

herein C is the length of bits of the CRC, and D is the length of bits of the DCI; and

the CRC is calculated for $\overline{\widetilde{CRC(i)}}$ (0≤i≤D-C-1) to obtain a C-bit CRC result $\overline{\widetilde{CRC(i)}}$, 0≤i≤C-1.

The UE1 determines that the DCI received is the indication information of the RAR if CRC(i) is the same as $\overline{\widetilde{CRC(i)}}$, then the UE1 decodes the random access response in the PDSCH according to the resource position indication information of the RAR.

Apart from the examples given in the embodiment, the DCI (including the indication information of the RAR and the CRC) can also be scrambled using the following formulas, specifically including:

$$d(i)=(DCI(i)+Pseudo\_Seq(i))\bmod 2, \ i = 0,1,\ldots, D\text{-}1$$

herein D is the length of bits of the DCI; and

Pseudo_Seq represents a pseudorandom sequence, and Pseudo_Seqs corresponding to different sets *P(j)* are different.

After completing the sending of the random access signaling, the UE1 will detect the indication information of the RAR in a predefined time window. The UE1 first decodes the PDCCH to obtain the Downlink Control Information (DIC) and calculates CRC(i) and $\overline{\widetilde{CRC(i)}}$ according to the following formulas:

$$\overline{\widetilde{DCI(i)}} = \left(DCI(i) + Pseudo\_Seq(i)\right)\bmod 2, \ \ i{=}0,1,\cdots,D-1 \ ,$$

and

$$CRC(i) = \left(\overline{\widetilde{DCI(i+D-C)}} + Specific\_RNTI(i)\right)\bmod 2, \ \ i{=}0,\cdots,C-1$$

herein D is the length of bits of the DCI; and

the CRC is calculated for $\overline{\widetilde{CRC(i)}}$ (0≤i≤D-C-1) to obtain a C-bit CRC result $\overline{\widetilde{CRC(i)}}$, 0≤i≤C-1.

The UE1 determines that the DCI received is the indication information of the RAR if CRC(i) is the same as $\overline{\widetilde{CRC(i)}}$, then the UE1 decodes the random access response in the PDSCH according to the resource position indication information of the RAR.

Embodiment 4: sending method 3

There are MTC UEs and non-MTC UEs (referred as Legacy UEs) in wireless systems, and for the sake of cost, there are some MTC UEs with low cost. For example, the number of receiving antennas is reduced, baseband processing bandwidth of the terminals is descreased, peak rate supported by the terminals is descreased, and a half-duplex mode is adopted. However, the reduction of cost means the reduction of performance, thus, for such low-cost MTC UEs, some measures should be taken to make up the loss in performance. Moreover, considering that the MTC terminals may be located in basements, at wall corners or the like where the channel environment is very bad, some measures are required to be taken as well to make up the loss in the performance. Considering that magnitudes of the loss in the performance required to be remedied by the MTC UEs in different scenarios are different, the MTC UEs can be divided into different sets, and corresponding link enhancement is carried out for the MTC UEs in each set.

As shown in FIG. 4, MTC UEs are divided into J sets P(j) according to a predefined rule, herein $0 \leq j \leq J -1$, and J is a positive integer equal to or grater than 1.

In the embodiment, J = 4, that is, the MTC UEs are divided into four sets: P(0), P(1), P(2) and P(3). A UE1 is an MTC UE belonging to P(1), the allocated sending mode of a random access sequence is Preamble format 0, the sent random access sequence is Preamble 1 with a time domain length of 1 subframe and needing to be sent repeatedly for four times, and the Preamble 1 occupies uplink subframes subframe2, subframe3, subframe4 and subframe5 in the time domain and, as shown in FIG. 2, occupies six PRBs, PRB7-PRB12, in the frequency domain. For the UE1, the PRACH consists of four parts in total, MTC PRACH0, MTC PRACH1, MTC PRACH2 and MTC PRACH3, herein MTC PRACH0 is a starting PRACH resource. The UE1 repeatedly sends the random access sequence for four times on the PRACH in the mode Preamble format 0, that is, the UE1 sends random access signaling on the PRACH.

A UE2 is an Legacy UE, the allocated sending mode of the random access sequence is Preamble format 0, the sent random access sequence is also Preamble 1 with a time domain length of 1 subframe, and the Preamble 1 occupies an uplink subframe subframe2 in the time domain and, as shown in FIG. 2, occupies six PRBs, PRB37-PRB42, in the frequency domain. For the UE2, the PRACH is Legacy PRACH0 which is also a starting PRACH resource. The UE2 sends the random access sequence on the PRACH in the mode Preamble format 0, that is, the UE2 sends random access signaling on the PRACH. An eNB detects, on the PRACH, all random access signaling that may be sent, and once the eNB detects that there is random access signaling being sent, the eNB will send a random access response (RAR) to responde to the detected random access signaling, herein the response to one or more random access signaling is contained in the RAR.

In the embodiment, the eNB detects that there are a plurality of MTC UEs belonging to sets P(1) or P(2), including the UE1, which have sent the random access signaling, and the eNB will carry indication information of the RARs of the MTC UEs belonging to different sets by sending different Downlink Control Information (DCI) on a Physical Downlink Control Channel (PDCCH) or an Enhanced Physical Downlink Control Channel (EPDCCH).

A 16-bit Cyclic Redundancy Check (CRC) is also included in the DCI, and the CRC is further scrambled using a 16-bit Random Access Radio Network Temporary Identity (RA_RNTI) in the following way:

$$g_k=(e_k+f_k)\bmod 2 \; k = 0,1,\ldots, 15$$

herein $e_k$ represents the (k+1)th bit in the CRC, fk represents the (k+1)th bit in the RA_RNTI, and $g_k$ represents the (k+1)th bit generated after the scrambling.

For the legacy UE, RA_RNTI=1+t_id+10*f_id, herein t_id(0≤t_id<10) is is an index of a subframe in which the starting resource of the PRACH is located, and f_id is an index of the frequency domain in which the starting PRACH resource is located (in an ascending order and 0≤f_id<6). In the embodiment, because the indication information of the RAR of the UE2 is not contained in the DCI, if the eNB still scrambles the CRC using the RA_RNTI of the legacy UE, then the UE2 will wrongly think that the indication information of its RAR is included in the DCI, and similarly, if the indication information of the RARs carried in the DCI is sent to the legacy UE, the MTC UEs will wrongly detect the indication information. Likewise, for the indication information of the RARs of the MTC UEs belonging to different sets, if the eNB still scrambles the CRC using the RA_RNTI of the legacy UE, then the MTC UEs belonging to different sets will wrongly detect the indication information of the RARs.

To avoid the occurrence of the erroneous detection, a formula for generating the RA_RNTIs is required to be redesigned for the MTC UEs.

In the embodiment, the RA_RNTIs allocated to the MTC UEs are selected from a set reserve-RNTI-set which is marked as Specific_RNTI. Elements in the reserve-RNTI-set are different from RNTIs allocated to the legacy UEs.

The Specific_RNTI can be calculated according to the following formulas:

$$Specific\_RNTI\_Index=\bmod(a\times frame\_id+b\times subframe\_id+c\times f\_id+d\times Subset\_id+Offset,N)+1,$$

and

$$\text{Specific\_RNTI}=\text{reserve-RNTI-set}(\text{Specific\_RNTI\_Index}),$$

herein Specific_RNTI_Index represents an index of the Specific_RNTI in the reserve-RNTI-set;

f_id is a frequency domain index of the starting PRACH resource occupied by the MTC UE when sending the random access signaling, $0 \leq \text{f\_id} < \text{f\_Num}$, and f_Num being the maximum number of all the PRACH resources that can be supported simultaneously in the frequency domain;

frame_id represents a relative index number of a frame in which the starting PRACH resource occupied by the MTC UE when sending the random access signaling is located, frame_id=mod(Frame_ID, Frame_Period), herein Frame_ID represents an index number of a frame in which the starting PRACH resource occupied by the MTC UE when sending the random access signaling is located, and Frame_Period represents the period of the frame_id;

subframe_id represents an index number of a subframe in which the starting PRACH resource occupied by the MTC UE when sending the random access signaling is located, $0 \leq \text{subframe\_id} < 10$;

Subset_id represents an index of a set $P(j)$ in which the MTC UE is located, $0 \leq \text{Subset\_id} \leq J-1$, and J being the total number of sets $P(j)$;

a, b, c and d are all integers equal to or greater than 0;

Offset is an offset configured for a system;

N represents the total number of RA_RNTIs allocated to the MTC UEs; and

mod(x, y) represents an operation of calculating the remainder from a division of x by y.

In an alternative configuration:

$$a=J\times10, \; b=J, \; c=J\times10\times\text{Frame\_Period}, \; d=1, \; \text{and Offset}=0;$$

$$\text{Specific\_RNTI\_Index}=\text{mod}(J\times10\times\text{frame\_id}+J\times\text{subframe\_id}+J\times10\times\text{Frame\_Period}\times\text{f\_id}+\text{Sebset\_id},N)+1;$$

and

$$\text{Specific\_RNTI}=\text{reserve-RNTI-set}(\text{Specific\_RNTI\_Index}).$$

After completing the sending of the random access signaling, the UE1 will detect the indication information of the RAR in a predefined time window. The UE1 first decodes the PDCCH to obtain Downlink Control Information (DCI) and calculates CRC(i) according to the following formula:

$$\text{CRC}(i)=(\text{DCI}(i+D-C)+\text{Specific\_RNTI}(i))\text{mod}2, \; i = 0,\ldots, C-1$$

herein CRC(i) represents the (i+1)th bit in the CRC, C is the length of bits of the CRC, and D is the length of bits of the DCI;

the CRC is calculated for DCI(i) ($0 \leq i \leq D-C-1$) to obtain a C-bit CRC result $\widetilde{CRC(i)}$, $0 \leq i \leq C-1$.

The UE1 determines that the DCI received is the indication information of the RAR if CRC(i) is the same as $\widetilde{CRC(i)}$, then the UE1 decodes the random access response in the PDSCH according to the resource position indication information of the RAR.

Apart from the formulas used in the embodiment, the Specific_RNTI may be calculated according to the following formulas:

$$\text{Specific\_RNTI\_Index}=1+a\times\text{frame\_id}+b\times\text{subframe\_id}+c\times\text{f\_id}+d\times\text{Subset\_id}+\text{Offset};$$

and

$$\text{Specific\_RNTI=reserve-RNTI-set(Specific\_RNTI\_Index),}$$

herein Specific_RNTI Index represents an index of the Specific_RNTI in the reserve-RNTI-set;

f_id is a frequency domain index of the starting PRACH resource occupied by the MTC UE when sending the random access signaling, $0 \le f\_id < f\_Num$, and f_Num being the maximum number of all the PRACH resources that can be supported simultaneously in the frequency domain;

frame_id represents a relative index number of a frame in which the starting PRACH resource occupied by the MTC UE when sending the random access signaling is located, frame_id=mod(Frame_ID, Frame_Period), herein Frame_ID represents an index number of a frame in which the starting PRACH resource occupied by the MTC UE when sending the random access signaling is located, Frame_Period represents the period of the frame_id, and mod(x, y) represents an operation of calculating the remainder from a division of x by y;

subframe_id represents an index number of a subframe in which the starting PRACH resource occupied by the MTC UE when sending the random access signaling is located, $0 \le subframe\_id < 10$;

Subset id represents an index of a set $P(j)$ in which the MTC UE is located, $0 \le Subset\_id \le J-1$, and J being a positive integer equal to or greater than 1;

a, b, c and d are all integers equal to or greater than 0; and

Offset is an offset configured for a system.

Alternatively,

$$a=J\times10, b=J, c=J\times10\times Frame\_Period, d=1, and Offset=0;$$

and

$$\text{Specific\_RNTI\_Index}=1+J\times10\times frame\_id+J\times subframe\_id+J\times10\times Frame\_Period\times f\_id+Seb$$

$$\text{set\_id Specific\_RNTI=reserve-RNTI-set(Specific\_RNTI\_Index).}$$

Embodiment 5: another embodiment of sending method 3

There are MTC UEs and non-MTC UEs (referred as Legacy UEs) in wireless systems, and for the sake of cost, there are some MTC UEs with low cost. For example, the number of receiving antennas is reduced, baseband processing bandwidth of the terminals is descreased, peak rate supported by the terminals is descreased, and a half-duplex mode is adopted. However, the reduction of cost means the reduction of performance, thus, for such low-cost MTC UEs, some measures should be taken to make up the loss in performance. Moreover, considering that the MTC terminals may be located in basements, at wall corners or the like where the channel environment is very bad, some measures are required to be taken as well to make up the loss in the performance. Considering that magnitudes of the loss in the performance required to be remedied by the MTC UEs in different scenarios are different, the MTC UEs can be divided into different sets, and corresponding link enhancement is carried out for the MTC UEs in each set.

As shown in FIG. 4, MTC UEs are divided into J sets $P(j)$ according to a predefined rule, herein $0 \le j \le J-1$, and J is a positive integer equal to or grater than 1.

In the embodiment, J = 4, that is, the MTC UEs are divided into four sets: P(0), P(1), P(2) and P(3). A UE1 is an MTC UE belonging to P(1), the allocated sending mode of a random access sequence is Preamble format 0, the sent random access sequence is Preamble 1 with a time domain length of 1 subframe and needing to be sent repeatedly for four times, and the Preamble 1 occupies uplink subframes subframe2, subframe3, subframe4 and subframe5 in the time domain and, as shown in FIG. 2, occupies six PRBs, PRB7-PRB12, in the frequency domain. For the UE1, the PRACH consists of four parts in total, MTC PRACH0, MTC PRACH1, MTC PRACH2 and MTC PRACH3, herein MTC PRACH0 is a starting PRACH resource. The UE1 repeatedly sends the random access sequence for four times on the PRACH in the mode Preamble format 0, that is, the UE1 sends random access signaling on the PRACH.

A UE2 is an Legacy UE, the allocated sending mode of the random access sequence is Preamble format 0, the sent random access sequence is also Preamble 1 with a time domain length of 1 subframe, and the Preamble 1 occupies an uplink subframe subframe2 in the time domain and, as shown in FIG. 2, occupies six PRBs, PRB37-PRB42, in the frequency domain. For the UE2, the PRACH is Legacy PRACH0 which is also a starting PRACH resource. The UE2 sends the random access sequence on the PRACH in the mode Preamble format 0, that is, the UE2 sends random access signaling on the PRACH. An eNB detects, on the PRACH, all random access signaling that may be sent, and once the eNB detects that there is random access signaling being sent, the eNB will send a random access response (RAR) to responde to the detected random access signaling, herein the response to one or more random access signaling is contained in the RAR.

In the embodiment, the eNB detects that there are a plurality of MTC UEs belonging to sets P(1) or P(2), including the UE1, which have sent the random access signaling, and the eNB will carry indication information of the RARs of the MTC UEs belonging to different sets by sending different Downlink Control Information (DCI) on a Physical Downlink Control Channel (PDCCH) or an Enhanced Physical Downlink Control Channel (EPDCCH).

A 16-bit Cyclic Redundancy Check (CRC) is also included in the DCI, and the CRC is further scrambled using a 16-bit Random Access Radio Network Temporary Identity (RA_RNTI) in the following way:

A 16-bit Cyclic Redundancy Check (CRC) is also included in the DCI, and the CRC is further scrambled using a 16-bit Random Access Radio Network Temporary Identity (RA_RNTI) in the following way:

$$g_k = (e_k + f_k) \bmod 2 \quad k = 0, 1, \ldots, 15,$$

herein $e_k$ represents the (k+1)th bit in the CRC, fk represents the (k+1)th bit in the RA_RNTI, and $g_k$ represents the (k+1)th bit generated after the scrambling.

For the legacy UE, RA_RNTI=1+t_id+10*f_id, herein t_id(0≤t_id<10) is an index of a subframe in which the starting resource of the PRACH is located, and f_id is an index of the frequency domain in which the starting PRACH resource is located (in an ascending order and 0≤f_id<6). In the embodiment, because the indication information of the RAR of the UE2 is not contained in the DCI, if the eNB still scrambles the CRC using the RA_RNTI of the legacy UE, then the UE2 will wrongly think that the indication information of its RAR is included in the DCI, and similarly, if the indication information of the RARs carried in the DCI is sent to the legacy UE, the MTC UEs will wrongly detect the indication information. Likewise, for the indication information of the RARs of the MTC UEs belonging to different sets, if the eNB still scrambles the CRC using the RA_RNTI of the legacy UE, then the MTC UEs belonging to different sets will wrongly detect the indication information of the RARs.

To avoid the occurrence of the erroneous detection, a formula for generating the RA_RNTIs is required to be redesigned for the MTC UEs.

In the embodiment, the RA_RNTIs allocated to the MTC UEs are selected from a set reserve-RNTI-set which is marked as Specific_RNTI. Elements in the reserve-RNTI-set are different from RNTIs allocated to the legacy UEs.

The Specific_RNTI can be calculated according to the following formulas:

$$\text{Specific\_RNTI} = 1 + a \times \text{frame\_id} + b \times \text{subframe\_id} + c \times \text{f\_id} + d \times \text{Subset\_id} + \text{Offset},$$

herein f_id is a frequency domain index of the starting PRACH resource occupied by the MTC UE when sending the random access signaling, 0≤f_id<f_Num, and f_Num being the maximum number of all the PRACH resources that can be supported simultaneously in the frequency domain;

frame_id represents a relative index number of a frame in which the starting PRACH resource occupied by the MTC UE when sending the random access signaling is located, frame_id=mod(Frame_ID, Frame_Period), herein Frame_ID represents an index number of a frame in which the starting PRACH resource occupied by the MTC UE when sending the random access signaling is located, Frame_Period represents the period of the frame_id, and mod(x, y) represents an operation of calculating the remainder from a division of x by y;

subframe_id represents an index number of a subframe in which the starting PRACH resource occupied by the MTC UE when sending the random access signaling is located, 0≤subframe_id<10;

Subset_id represents an index of a set P(j) in which the MTC UE is located, 0≤Subset_id≤J-1, and J being the total number of sets P(j);

a, b, c and d are all integers equal to or greater than 0; and

Offset is an offset configured for a system.

In a first exemplary configuration:

0≤f_id<f_Num, herein f_Num is the maximum number of all the PRACH resources that can be supported simultaneously in the frequency domain;

$$0 \le subframe\_id < 10;$$

$$0 \le subframe\_id < Frame\_Period;$$

$$a = J \times 10, b = J, c = J \times 10 \times Frame\_Period, \text{ and } d = 1;$$

$$Offset = N_{RA-RNTI}^{LegacyUE}$$ Offset represents the total number of RA_RNTIs allocated to the legacy UEs; then

$$Specific\_RNTI = 1 + J \times 10 \times frame\_id + J \times subframe\_id + J \times 10 \times frame\_Period \times f\_id + N_{RA-RNTI}^{LegacyUE}.$$

In a second exemplary configuration:

Max $f\_id_{LegacyUE} \le f\_id < f\_Num + Max\ f\_id_{LegacyUE}$, herein f_Num is the maximum number of all the MTC PRACH resources that can be supported simultaneously in the frequency domain; Max $f\_id_{LegacyUE}$ is the maximum number of the legacy PRACH resources that can be supported simultaneously in the frequency domain;

$$0 \le subframe\_id < 10;$$

$$0 \le subframe\_id < Frame\_Period;$$

$$a = J \times 10, b = J, c = J \times 10 \times Frame\_Period, d = 1;$$

and

$$Offset = 0;$$

then Specific_RNTI=1+J×10×frame_id+J×subframe_id+J×10×Frame_Period×f_id.

After completing the sending of the random access signaling, the UE1 will detect the indication information of the RAR in a predefined time window. The UE1 first decodes the PDCCH to obtain the Downlink Control Information (DIC) and calculates CRC(i) according to the following formula:

$$CRC(i) = (DCI(i+D-C) + Specific\_RNTI(i)) \bmod 2, \ i = 0, \ldots, C-1$$

herein CRC(i) represents the (i+1)th bit in the CRC, C is the length of bits of the CRC, and D is the length of bits of the DCI; and

the CRC is calculated for DCI(i) (0≤i≤D-C-1) to obtain a C-bit CRC result $\widetilde{CRC(i)}$, 0≤i≤C-1.

The UE1 determines that the DCI received is the indication information of the RAR if CRC(i) is the same as $\widetilde{CRC(i)}$, then the UE1 continues to decode the indication information of the set in the indication information of the RAR. If the coverage enhanced level information of the UE1 is contained in the indication information of the set, then the UE1 further decodes the random access response in the PDSCH according to the resource position indication information of the RAR.

In still another embodiment, software is provided which is configured to implement the technical schemes described in the foregoing embodiments and exemplary implementations.

In still another embodiment, a storage medium is provided which have stored the foregoing software therein. The storage medium includes, but is not limited to be, an optical disk, a floppy disk, a hard disk and an erasable memory.

Apparently, those skilled in the art should understand that various modules or steps of the present invention described above may be implemented by general-purpose computing devices that may be centralized on a single computing device or distributed over a network consisting of a plurality of computing devices. Optionally, the modules or steps may be implemented by program codes executable by the computing devices such that they may be stored in storage devices and executed by the computing devices, and in some cases, the steps shown or described may be executed in an order different from that shown herein. Or they may be made separately into individual integrated circuit modules, or some of them may be made into a single integrated circuit module. Thus, the present invention is not limited to any particular combination of hardware and software.

The above description is only exemplary embodiments of the present invention and is not intended to limit the present invention. Those skilled in the art should understand that the present invention may have various changes and modifications. Any modification, equivalent substitution, improvement and the like made within the spirit and principle of the present invention should be included in the protection scope of the present invention.

Industrial Applicability

As described above, the method and apparatus for transmitting the random access response provided by the embodiments of the present invention have the following beneficial effect: the problem in the related art of how to accurately transmit the random access response sent to different types of terminals is solved, the probability that the node of the third type detects the random access response correctly is improved, and the power consumption of the node of the third type is reduced.

**Claims**

1. A method for transmitting a random access response, comprising:

    sending, by a node of a first type, indication information of a random access response of a node of a third type through a downlink channel, wherein the indication information comprises at least one of:

        indication information of a set to which the node of the third type belongs, and
        resource position indication information of the random access response of the node of the third type;
        wherein the node of the third type is a node of a second type in one or more sets $P(j)$, $0 \le j \le J - 1$, and J is a positive integer which is equal to or grater than 1.

2. The method according to claim 1, wherein, before a node of a first type sends indication information of a random access response of a node of a third type through a downlink channel, the method further comprises:

    sending, by the node of the third type, a random access signaling to the node of the first type on a Physical Random Access Channel, PRACH.

3. The method according to claim 1, wherein, before a node of a first type sends indication information of a random access response of a node of a third type through a downlink channel, the method further comprises:

    dividing nodes of the second type into J sets $P(j)$ according to a predefined rule.

4. The method according to any one of claims 1 to 3, wherein, in the case that the indication information of the random access response comprises the indication information of the set to which the node of the third type belongs, the method further comprises:

    describing the indication information of the set using a bitmap.

5. The method according to any one of claims 1 to 3, wherein, in the case that the indication information of the random access response comprises the indication information of the set to which the node of the third type belongs, the method further comprises:

    describing the indication information of the set using $\lceil \log_1 J \rceil$ bits, wherein $\lceil \ \rceil$ represents rounding up.

6. The method according to claim 1, wherein, sending, by a node of a first type, indication information of a random access response of a node of a third type through a downlink channel comprises:

containing, by the node of the first type, the indication information of the random access response of the node of the third type into downlink control information, DCI, wherein the DCI further comprises a Cyclic Redundancy Check, CRC, and the CRC is scrambled using a Random Access-Radio Network Temporary Identity, RA_RNTI; and

sending, by the node of the first type, the DCI through a Physical Downlink Control Channel, PDCCH, or an Enhanced Physical Downlink Control Channel, EPDCCH.

7. The method according to claim 6, wherein, the RA_RNTI used in the scrambling of the CRC is marked as *Specific_RNTI*, the *Specific_RNTI* is selected from a set of Radio Network Temporary Identities, RNTI, marked as *reserve-RNTI-set*, wherein elements in the *reserve-RNTI-set* are at least one of:

a part of or all of RNTIs available to a node of a fourth type;
a part of or all of RA_RNTIs available to the node of the fourth type;
a part of or all of RNTIs allocated to the node of the second type; and
a part of or all of RA_RNTIs allocated to the node of the second type.

8. The method according to claim 7, wherein,
the RA_RNTIs in the *reserve-RNTI-set* are different from an RNTI allocated to the node of the fourth type.

9. The method according to claim 7, wherein,
an index of the *Specific_RNTI* in the *reserve-RNTI-set* is at least determined by a *frame_id*, a *subframe_id* and an *f_id,* wherein, the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; and the *subframe_id* is an index number or a relative index number of a subframe at which the starting time domain resource of the occupied PRACH is located when the random access signaling is sent.

10. The method according to claim 9, wherein the *Specific_RNTI* is calculated according to following formulas:

$$Specific\_RNTI\_Index = \mathrm{mod}(a \times frame\_id + b \times subframe\_id + c \times f\_id + Offset, N) \quad,$$

and,

$$Specific\_RNTI = reserve - RNTI - set(Specific\_RNTI\_Index)$$

wherein, *a*, *b* and *c* are all integers equal to or greater than 0; *Offset* is an offset configured by a system; N represents the number of the allocated *Specific_RNTIs; Specific_RNTI_Index* represents an index of the *Specific_RNTI* in the *reserve-RNTI-set*; and mod(x, *y*) represents an operation of taking a remainder from a division of x by y.

11. The method according to claim 6, wherein, the RA_RNTI used in the scrambling of the CRC is marked as *Specific_RNTI*, and the *Specific_RNTI* is at least determined by a *frame_id*, a *subframe_id* and an *f_id*, wherein the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; and the *subframe_id* is an index number or a relative index number of a subframe at which the starting time domain resource of the occupied PRACH is located when the random access signaling is sent.

12. The method according to claim 11, wherein, the *Specific_RNTI* is calculated according to a following formula:

$$Specific\_RNTI = a \times frame\_id + b \times subframe\_id + c \times f\_id + Offset,$$

wherein, *a*, *b* and *c* are all integers equal to or greater than 0, and *Offset* is an offset configured by a system.

**13.** The method according to any one of claims 7 to 12, wherein, the CRC is scrambled in a following way:

$$a(i) = (CRC(i) + Specific\_RNTI(i)) \bmod 2, \quad i{=}0,1,\ldots,C{-}1,$$

$$b(i) = (a(i) + Pseudo\_Seq(i)) \bmod 2, \quad i{=}0,1,\ldots,C{-}1,$$

or

$$b(i) = (CRC(i) + Specific\_RNTI(i) + Pseudo\_Seq(i)) \bmod 2, \quad i{=}0,1,\ldots,C{-}1;$$

wherein, $CRC(i)$ is the (i+1)th bit in the CRC, $Specific\_RNTI(i)$ is the (i+1)th bit in the $Specific\_RNTI$, C is a length of bits of the CRC, sequences $Pseudo\_Seq$ corresponding to nodes of the third type belonging to different sets $P(j)$ are different, and $b(i)$ is the (i+1)th bit generated after the scrambling.

**14.** The method according to any one of claims 7 to 12, wherein, the method further comprises:

scrambling the DCI in which the indication information of the random access responses of the node of the third type is included in the following way:

$$DCI(i) = (DCI(i) + Pseudo\_Seq(i)) \bmod 2, i = 0,1,\cdots,D-C-1,$$

$$DCI(i+D-C) = (DCI(i+D-C) + Specific\_RNTI(i)) \bmod 2, i = 0,1,\cdots,C-1;$$

wherein, C is a length of bits of the CRC, D is a length of bits of the DCI, and sequences $Pseudo\_Seq$ corresponding to nodes of the third type belonging to different sets $P(j)$ are different.

**15.** The method according to any one of claims 7 to 12, wherein, the method further comprises:

scrambling the DCI in which the indication information of the random access responses of the node of the third type is included in the following way:

$$d(i) = (DCI(i) + Pseudo\_Seq(i)) \bmod 2, i = 0,1,\cdots,D-1,$$

wherein, $DCI(i)$ represents the (i+1)th bit in the DCI, D is a length of bits of the DCI, sequences $Pseudo\_Seq$ corresponding to the nodes of the third type belonging to different sets $P(j)$ are different, and $d(i)$ is the (i+1)th bit generated after the scrambling.

**16.** The method according to claim 6, wherein, the RA_RNTI used in the scrambling of the CRC is marked as $Specific\_RNTI$, the $Specific\_RNTI$ is selected from a set of RNTIs marked as $reserve{-}RNTI{-}set$, wherein elements in the $reserve{-}RNTI{-}set$ are at least one of:

a part of or all of RNTIs available to a node of a fourth type;
a part of or all of RA_RNTIs available to the node of the fourth type;
a part of or all of RNTIs allocated to the node of the second type; and
a part of or all of RA_RNTIs allocated to the node of the second type; and
RA_RNTIs allocated to the node of the third type.

**17.** The method according to claim 16, wherein
the RNTIs in the reserve-RNTI-sets corresponding to different nodes of the third type are different.

**18.** The method according to claim 16, wherein

the *Specific_RNTI* is at least determined by a *frame_id*, a *subframe_id*, an *f_id* and a *Subset_id*, wherein, the *f_id* is an index of a starting frequency domain resource of a PRACH occupied when random access signaling is sent; the *frame_id* is an index number or a relative index number of a frame at which the starting time domain resource of the occupied PRACH is located when the random access signaling is sent; the *subframe_id* is an index number or a relative index number of a subframe at which the starting time domain resource of the occupied PRACH is located when the random access signaling is sent; and the *Subset_id* is an index of a set *P(j)* at which the node of the third type is located, $0 \leq$ *Subset_id* $\leq J$ - 1, and J is a positive integer equal to or greater than 1.

**19.** The method according to claim 18, wherein, the *Specific_RNTI* is calculated according to following formulas:

$$Specific\_RNTI\_Index = \mathrm{mod}(a \times frame\_id + b \times subframe\_id + c \times f\_id + d \times Subset + Offset, N)$$

, and,

$$Specific\_RNTI = reserve - RNTI - set(Specific\_RNTI\_Index),$$

wherein, *a*, *b,* c and *d* are all integers equal to or greater than 0; *Offset* $\geq 0$ is an offset configured by a system; N represents the number of the allocated *Specific_RNTIs*; *Specific_RNTI_Index* represents an index of the *Specific_RNTI* in the *reserve-RNTI-set*; and mod(*x*, *y*) represents an operation of taking a remainder from a division of x by y.

**20.** The method according to claim 18, wherein the *Specific_RNTI* is calculated according to a following formula:

$$Specific\_RNTI = a \times frame\_id + b \times subframe\_id + c \times f\_id + d \times Subset\_id + Offset,$$

wherein *a*, *b, c* and *d* are all integers equal to or greater than 0, and *Offset* is an offset configured by a system.

**21.** The method according to claim 7, wherein, after the node of the first type sends the DCI through the PDCCH or EPDCCH, the method further comprises:

decoding, by the node of the third type, the PDCCH or the EPDCCH in a preset time window to obtain the DCI, and calculating *CRC(i)* according to a following formula:

$$CRC(i) = (DCI(i + D - \mathrm{C}) + Specific\_RNTI(i)) \,\mathrm{mod}\, 2, \quad \mathrm{i=0,1,\ldots,}C\text{-}1,$$

wherein, CRC(i) is the (i+1)th bit in the CRC, C is a length of bits of the CRC, and D is a length of bits of the DCI; and

calculating the CRC for *DCI(i)*, $0 \leq i \leq D$ - *C* - 1 to obtain a C-bit CRC result $\widetilde{CRC(i)}$, $0 \leq i \leq C$ - 1.

**22.** The method according to claim 21, wherein, the method further comprises:

determining, by the node of the third type, that the received DCI is the indication information of the random access response if *CRC(i)* is the same as $\widetilde{CRC(i)}$.

**23.** The method according to claim 22, wherein, after the node of the third type determines that the received DCI is the indication information of the random access response, the method further comprises:

decoding, by the node of the third type, the indication information of the set in the indication information of the random access response; and
decoding, the node of the third type, the random access response according to the resource position indication information in the random access response if a set to which the node of the third type belongs is contained in the indication information of the set.

24. The method according to claim 13, wherein, after the node of the first type sends the DCI through the PDCCH or EPDCCH, the method further comprises:

decoding, by the node of the third type, the PDCCH or the EPDCCH in a preset time window to obtain the DCI, and calculating $CRC(i)$ according to a following formula:

$$CRC(i) = (DCI(i + D - C) + Specific\_RNTI(i) + Pseudo\_Seq(i)) \bmod 2, \qquad i=0,1,\dots,C\text{-}1,$$

wherein, $CRC(i)$ is the $(i+1)^{th}$ bit in the CRC, C is a length of bits of the CRC, and D is a length of bits of the DCI; and

calculating the CRC for $DCI(i)$, $0 \le i \le D - C - 1$ to obtain a C-bit CRC result $\overline{CRC(i)}$, $0 \le i \le C - 1$.

25. The method according to claim 14, wherein, after the node of the first type sends the DCI through the PDCCH or EPDCCH, the method further comprises:

decoding, by the node of the third type, the PDCCH or the EPDCCH in a preset time window to obtain the DCI, and calculating $CRC(i)$ and $\overline{DCI(i)}$ according to following formulas:

$$CRC(i) = (DCI(i + D - C) + Specific\_RNTI(i)) \bmod 2, \quad i = 0,1,\cdots,C-1,$$

and

$$\overline{DCI(i)} = (DCI(i) + Pseudo\_Seq(i)) \bmod 2, \; i = 0,1,\cdots,D-C-1;$$

wherein, C is a length of bits of the CRC, and D is a length of bits of the DCI; and

calculating the CRC for the $\overline{DCI(i)}$ to obtain a C-bit CRC result $\overline{CRC(i)}$, $0 \le i \le C - 1$.

26. The method according to claim 15, wherein, after the node of the first type sends the DCI through the PDCCH or EPDCCH, the method further comprises:

decoding, by the node of the third type, the PDCCH or the EPDCCH in a preset time window to obtain the DCI, and calculating $CRC(i)$ and $\overline{DCI(i)}$ according to following formulas:

$$\overline{DCI(i)} = (DCI(i) + Pseudo\_Seq(i)) \bmod 2, \; i = 0,1,\cdots,D-1,$$

and

$$CRC(i) = (\overline{DCI(i + D - C)} + Specific\_RNTI(i)) \bmod 2, \quad i = 0,1,\cdots,C-1;$$

wherein, C is a length of bits of the CRC, and D is a length of bits of the DCI; and

calculating the CRC for $\overline{DCI(i)}$ to obtain a C-bit CRC result $\overline{CRC(i)}$, $0 \le i \le C - 1$.

27. The method according to any one of claims 24 to 26, wherein, the method further comprises:

determining, by the node of the third type, that the received DCI is the indication information of the random access response if $CRC(i)$ is the same as $\overline{CRC(i)}$.

28. The method according to claim 27, wherein, after the node of the third type determines that the received DCI is the indication information of the random access response, the method further comprises:

> decoding, by the node of the third type, the random access response according to the resource position indication information in the random access response.

**29.** The method according to claim 16, wherein, after the node of the first type sends the DCI through the PDCCH or EPDCCH, the method further comprises:

> decoding, by the node of the third type, the PDCCH or the EPDCCH in a preset time window to obtain the DCI, and calculating *CRC(i)* according to a following formula:

$$CRC(i) = (DCI(i + D - C) + Specific\_RNTI(i)) \bmod 2, \quad i=0,1,\ldots,C\text{-}1,$$

> wherein, CRC(i) is the (i+1)$^{th}$ bit in the CRC, C is a length of bits of the CRC, and D is a length of bits of the DCI; and
>
> calculating the CRC for *DCI(i)*, $0 \le i \le D - C - 1$ to obtain a C-bit CRC result $\widetilde{CRC(i)}$, $0 \le i \le C - 1$.

**30.** The method according to claim 29, wherein the method further comprises:

> determining, by the node of the third type, that the received DCI is the indication information of the random access response if *CRC(i)* is the same as $\widetilde{CRC(i)}$.

**31.** The method according to claim 30, wherein, after the node of the third type determines that the received DCI is the indication information of the random access response, the method further comprises:

> decoding, by the node of the third type, the random access response according to the resource position indication information in the random access response.

**32.** The method according to any one of claims 1 to 31, wherein the node of the first type comprises at least one of:

> macro cells, micro cells, pico cells, femto cells, home NodeBs, low-power node and relays.

**33.** The method according to any one of claims 1 to 31, wherein the node of the second type comprises at least one of:

> more than one terminals or terminal groups;
> more than one Machine Type Communication (MTC) terminals or MTC terminal groups;
> more than one Machine to Machine (M2M) terminals or M2M terminal groups; and
> more than one Device to Device (D2D) terminals or D2D terminal groups.

**34.** The method according to any one of claims 1 to 31, wherein the node of the fourth type comprises at least one of:

> terminals or terminal groups supported by an existing LTE/LTE-A standard; and
> terminals or terminal groups supported by LTE Release 11 and previous editions of the LTE Release 11.

**35.** The method according to any one of claims 10, 12, 19 and 20, wherein the system is arranged by at least one of:

> a standard, a network, and a network high level.

**36.** An apparatus for transmitting a random access response, located in node of a first type, comprising:

> a sending module arranged to send indication information of a random access response of a node of a third type through a downlink channel, wherein the indication information comprises at least one of:
>
> > indication information of a set to which the node of the third type belongs; and
> > resource position indication information of the random access response of the node of the third type;

wherein the node of the third type is a node of a second type in one or more sets $P(j)$, $0 \leq j \leq J - 1$, and J is a positive integer which is equal to or grater than 1.

37. The apparatus according to claim 36, wherein the node of the first type comprises at least one of:

macro cells, micro cells, pico cells, femto cells, home NodeBs, low-power node and relays.

38. The apparatus according to claim 36, wherein the node of the second type comprises at least one of:

more than one terminals or terminal groups;
more than one Machine Type Communication (MTC) terminals or MTC terminal groups;
more than one Machine to Machine (M2M) terminals or M2M terminal groups; and
more than one Device to Device (D2D) terminals or D2D terminal groups.

a node of a first type sends indication information
of a random access response of a node of a
third type through a downlink channel, herein the
indication information includes at least one
of: indication information of a set to which the
node of the third type belongs, and resource
position indication information of the random
access response of the node of the third type

S102

FIG. 1

Sending module 22

Apparatus for transmitting
a random access response

FIG. 2

| | | | | | | | | | |
|---|---|---|---|---|---|---|---|---|---|
| PRB Index 42 → | | | Legacy PRACH 0 | | | | | | |
| PRB Index 37 → | | | | | | | | | |
| PRB Index 32 → | | | Legacy PRACH 1 | | | | | | |
| PRB Index 27 → | D | S | U | U | D | D | S | U | U | D |
| PRB Index 12 → | | | MTC PRACH 0 | MTC PRACH 1 | | | | MTC PRACH 2 | MTC PRACH 3 | |
| PRB Index 7 → | | | | | | | | | | |

Subframe 0  Subframe 1  Subframe 2  Subframe 3  Subframe 4  Subframe 5  Subframe 6  Subframe 7  Subframe 8  Subframe 9

D:Downlink subframe          U:Uplink subframe          S:Special subframe

FIG. 3

PRB Index 42

PRB Index 37

PRB Index 32

PRB Index 27

PRB Index 12

PRB Index 7

| | | Legacy PRACH 0 | | | | | | | |
| | | Legacy PRACH 1 | | | | | | | |
| U | U | U | U | U | U | U | U | U | U |
| | | MTC PRACH 0 | MTC PRACH 1 | MTC PRACH 2 | MTC PRACH 3 | | | | |

| Subframe 0 | Subframe 1 | Subframe 2 | Subframe 3 | Subframe 4 | Subframe 5 | Subframe 6 | Subframe 7 | Subframe 8 | Subframe 9 |

U:Uplink subframe

FIG. 4

## INTERNATIONAL SEARCH REPORT

| International application No. |
|---|
| PCT/CN2015/076370 |

**A. CLASSIFICATION OF SUBJECT MATTER**

H04W 74/08 (2009.01) i

According to International Patent Classification (IPC) or to both national classification and IPC

**B. FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

WPI, EPODOC, CNPAT, CNKI: random access, M2M, PDCCH, PDSCH, RANDOM, ACCESS, RAR, SET, GROUP, ID, TYPE, CLASSIF+, IDENTI+, INDICAT+, BASE W STATION, ENB, E W NODEB, RESOURCE, POSITION

**C. DOCUMENTS CONSIDERED TO BE RELEVANT**

| Category* | Citation of document, with indication, where appropriate, of the relevant passages | Relevant to claim No. |
|---|---|---|
| X | CN 103220811 A (ZTE CORP.) 24 July 2013 (24.07.2013) description, paragraphs [0098] to [0101] | 1-3, 32, 33, 36-38 |
| Y | CN 103220811 A (ZTE CORP.) 24 July 2013 (24.07.2013) description, paragraphs [0098] to [0101] | 6 |
| Y | CN 103582073 A (ZTE CORP.) 12 February 2014 (12.02.2014) description, paragraphs [0129] to [0131], [0151], and [0163] | 6 |
| A | CN 102917433 A (INNOFIDEI TECHNOLOGY CO., LTD.) 6 February 2013 (06.02.2013) the whole document | 1-38 |
| A | WO 2014069946 A1 (LG ELECTRONICS INC.) 08 May 2014 (08.05.2014) the whole document | |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 15 June 2015 | 17 July 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WANG, Yue Telephone No. (86-10) 62413679 |
|---|---|

Form PCT/ISA/210 (second sheet) (July 2009)

**INTERNATIONAL SEARCH REPORT**
Information on patent family members

| International application No. |
| :---: |
| PCT/CN2015/076370 |

| Patent Documents referred in the Report | Publication Date | Patent Family | Publication Date |
| :---: | :---: | :---: | :---: |
| CN 103220811 A | 24 July 2013 | WO 2013107251 A1 | 25 July 2013 |
| CN 103582073 A | 12 February 2014 | WO 2014019436 A1 | 06 February 2014 |
| CN 102917433 A | 06 February 2013 | None | |
| WO 2014069946 A1 | 08 May 2014 | None | |

Form PCT/ISA /210 (patent family annex) (July 2009)